# EUROPEAN PATENT APPLICATION

(11) **EP 4 583 575 A1**
(43) Date of publication of application: **09.07.2025**
(21) Application number: 23870254.2
(22) Date of filing: 07.09.2023
(51) Int. Cl.: H04W 36/00

(54) **COMMUNICATION METHOD, COMMUNICATION APPARATUS, AND COMMUNICATION SYSTEM**

(30) Priority: 27.09.2022 CN 202211183082; 14.11.2022 CN 202211419046
(71) Applicant: Huawei Technologies Co., Ltd., Shenzhen, Guangdong 518129 (CN)
(72) Inventor: SUN, Fei, Shenzhen, Guangdong 518129 (CN); ZHU, Yuanping, Shenzhen, Guangdong 518129 (CN); SHI, Yulong, Shenzhen, Guangdong 518129 (CN); ZHU, Shichao, Shenzhen, Guangdong 518129 (CN); WEI, Zongkun, Shenzhen, Guangdong 518129 (CN)
(74) Representative: Thun, Clemens
(86) International application number: PCT/CN2023/117585
(87) International publication number: WO 2024/067015

(57) **Abstract**

A communication method, a communication apparatus, and a communication system are disclosed. The communication method includes: A second donor node sends a first message. Correspondingly, a first donor node receives the first message. The first message includes a list of a target donor node to which a relay node is to migrate. There is an F1 connection between the first donor node and the relay node, and there is a radio resource control RRC connection between the second donor node and the relay node. The first donor node determines a target donor node and a migration mode in the list of the target donor node. The first donor node sends a second message. Correspondingly, the second donor node receives the second message. The second message includes first indication information, and the first indication information indicates the target donor node and the migration mode. According to embodiments of this application, an IAB node can migrate between different donor node topologies more properly.

## Description

This application claims priorities to Chinese Patent Application No. 202211183082.9, filed with the China National Intellectual Property Administration on September 27, 2022 and entitled "COMMUNICATION METHOD, COMMUNICATION APPARATUS, AND COMMUNICATION SYSTEM", and to Chinese Patent Application No. 202211419046.8, filed with the China National Intellectual Property Administration on November 14, 2022 and entitled "COMMUNICATION METHOD, COMMUNICATION APPARATUS, AND COMMUNICATION SYSTEM", both of which are incorporated herein by reference in their entireties.

### TECHNICAL FIELD

This application relates to the field of communication technologies, and in particular, to a communication method, a communication apparatus, and a communication system.

### BACKGROUND

Compared with a 4th generation mobile communication system, 5th generation mobile communication (5G) has stricter requirements on network performance indicators, for example, a capacity increased by 1000 times, a wider coverage requirement, and ultra-high reliability and ultra-low latency. Considering that high-frequency carrier frequency resources are abundant, to meet an ultra-high capacity requirement of 5G, high-frequency small cell networking becomes more and more popular in a hotspot area. A high-frequency carrier has a poor propagation characteristic, is severely attenuated due to blocking, and has a small coverage area. Therefore, a large quantity of small cells need to be densely deployed. Correspondingly, it is costly to provide optical fiber backhaul for the large quantity of densely deployed small cells, and construction is difficult. Therefore, an economical and convenient backhaul solution is needed. In addition, in consideration of the wide coverage requirement, it is difficult and costly to deploy optical fibers for network coverage in some remote areas. Therefore, a flexible and convenient access and backhaul solution also needs to be designed. An integrated access and backhaul (integrated access and backhaul, IAB) technology provides an idea to resolve the foregoing two problems: In the IAB technology, a wireless transmission solution is used for both an access link (Access Link) and a backhaul link (Backhaul Link), to reduce the optical fiber deployment.

In an IAB network, one donor node may be connected to one or more IAB nodes, and an IAB node may migrate between different donor node topologies. The donor node topology is a topology controlled by a donor node. In some scenarios, when the IAB node migrates between the different donor node topologies, the IAB node may migrate a radio resource control (radio resource control, RRC) connection and an F1 connection, or the IAB node may migrate only the RRC connection without migrating the F1 connection. Therefore, how the IAB node properly migrates between the different donor node topologies is an urgent problem to be resolved.

### SUMMARY

Embodiments of this application disclose a communication method, a communication apparatus, and a communication system, so that an IAB node can migrate between different donor node topologies more properly.

According to a first aspect, an embodiment of this application provides a communication method. The method may be performed by a first donor node, or may be performed by a component (for example, a chip or a circuit) of the first donor node. This is not limited herein. The method includes the following steps.

The first donor node receives a first message from a second donor node. The first message includes a list of a target donor node to which a relay node is to migrate. There is an F1 connection between the first donor node and the relay node, and there is a radio resource control RRC connection between the second donor node and the relay node. The first donor node determines a target donor node and a migration mode in the list of the target donor node. The migration mode includes a first migration mode or a second migration mode. The first migration mode includes migrating the F1 connection of the relay node to the target donor node, and the second migration mode includes maintaining the F1 connection between the relay node and the first donor node. The first donor node sends a second message to the second donor node. The second message includes first indication information, and the first indication information indicates the target donor node and the migration mode.

In this embodiment of this application, the relay node may be an IAB node. When determining that the relay node needs to perform migration, the second donor node may report, to the first donor node through the first message, the list of the target donor node to which the relay node can migrate. Then, the first donor node determines, in the list of the target donor node, the target donor node to which the relay node can migrate and the migration mode used by the relay node to migrate to the target donor node. The F1 connection of the relay node is terminated at the first donor node. The first donor node determines the target donor node and the migration mode, so that the relay node can migrate to a proper target donor node, and the relay node can migrate between different donor node topologies more properly.

In a possible implementation, that the first donor node determines a target donor node and a migration mode in the list of the target donor node includes:
The first donor node determines the target donor node and the migration mode in the list of the target donor node based on a connection relationship. The connection relationship is at least one of the following connections between the first donor node and the donor node in the list of the target donor node: an Xn connection, an NG connection, and an internet protocol IP network connection.

In this embodiment of this application, the first donor node may determine the target donor node and the migration mode based on whether the first donor node has an Xn connection, NG connection, or internet protocol (Internet protocol, IP) network connection relationship with the donor node in the list of the target donor node. For example, the first donor node determines whether there is an Xn interface between the first donor node and the donor node in the list of the target donor node, or the first donor node determines whether the first donor node and the donor node in the list of the target donor node are reachable to each other through NG interfaces via an access and mobility management function (access and mobility management function, AMF) serving as a relay, or the first donor node determines whether there is an IP network connection between the first donor node and a distributed unit (distributed unit, DU) of the donor node in the list of the target donor node . The first donor node determines the target donor node and the migration mode in the list of the target donor node based on the connection relationship between the first donor node and the donor node in the list of the target donor node, so that data traffic of the relay node can be migrated to a topology corresponding to the target donor node after the relay node migrates to the target donor node.

In a possible implementation, the migration mode includes the second migration mode, there is the Xn connection between the first donor node and a central unit (central unit, CU) of the target donor node, and there is the IP network connection between the first donor node and a distributed unit DU of the target donor node.

In this embodiment of this application, the migration mode is the second migration mode. To be specific, the RRC connection of the relay node is migrated from the second donor node to the target donor node, and the relay node maintains the F1 connection to the first donor node. When there is the Xn connection between the first donor node and the CU of the target donor node, and there is the IP network connection between the first donor node and the DU of the target donor node, the relay node can maintain the F1 connection between the first donor node and the relay node after migrating to the target donor node. Therefore, the first donor node determines that the migration mode is the second migration mode, so that migration of the F1 connection of the relay node between different donor nodes can be reduced, thereby reducing a service interruption delay of the relay node, and ensuring stability of service communication between the relay node and a network.

In a possible implementation, the migration mode includes the first migration mode, there is the NG connection between the first donor node and an access and mobility management function AMF, and there is the NG connection between the target donor node and the AMF.

In this embodiment of this application, the migration mode includes the first migration mode. To be specific, both the RRC connection and the F1 connection of the relay node are migrated to the target donor node. There is the NG connection between the first donor node and the AMF, and there is the NG connection between the target donor node and the AMF. In other words, the first donor node and the target donor node are reachable to each other through NG interfaces via the AMF serving as a relay. The first donor node determines that the migration mode is the first migration mode, so that data traffic of the relay node can be migrated to the target donor node after the relay node migrates to the target donor node.

In a possible implementation, the method further includes:
The first donor node receives a third message from the second donor node. The third message indicates that the first donor node is to initiate a migration procedure for data traffic of the relay node to the target donor node. The first donor node sends a first request message to the target donor node based on the third message. The first request message is used to request migration of the data traffic. The first donor node receives a first response message from the target donor node. The first response message is used to respond to the migration of the data traffic.

In this embodiment of this application, after the relay node migrates to the target donor node, the second donor node may indicate, through the third message, the first donor node to initiate the migration procedure for the data traffic of the relay node, so that the data traffic of the relay node can be migrated from a topology corresponding to the second donor node to a topology corresponding to the target donor node.

In a possible implementation, the third message includes at least one of the following: an Xn interface identifier allocated by the target donor node to the relay node, an identifier of the target donor node, or an IP address of the relay node in a topology corresponding to the target donor node.

In this embodiment of this application, the topology corresponding to the target donor node is a topology managed by the target donor node. The third message may include the Xn interface identifier allocated by the target donor node to the relay node, so that the first donor node and the target donor node can identify the relay node. Alternatively, the third message includes the identifier of the target donor node, so that the first donor node can determine the target donor node. Alternatively, the third message includes the IP address of the relay node in the topology corresponding to the target donor node, so that data of the first donor node can be routed to the relay node.

In a possible implementation, the method further includes:
The first donor node receives a fourth message from the second donor node. The fourth message includes a migration result of migrating data traffic of the relay node to the target donor node, and the migration result includes a data traffic list that is added to the target donor node and/or a data traffic list that is not added to the target donor node.

In this embodiment of this application, the second donor node may initiate a migration procedure for the data traffic of the relay node, so that the data traffic of the relay node can be migrated between the different donor node topologies. After migrating the data traffic of the relay node to the target donor node, the second donor node feeds back the migration result to the first donor node through the fourth message, so that the first donor node can learn of the migration result.

In a possible implementation, the method further includes: The first donor node sends second indication information to the second donor node. The second indication information indicates that the second donor node is to initiate a migration procedure for the data traffic of the relay node to the target donor node.

In this embodiment of this application, the first donor node may indicate, through the second indication information, the second donor node to autonomously initiate the migration procedure for the data traffic of the relay node, so that the data traffic of the relay node can be migrated from a topology corresponding to the second donor node to a topology corresponding to the target donor node.

In a possible implementation, the method further includes: The first donor node sends third indication information to the relay node. The third indication information indicates that the relay node is to release a context corresponding to the data traffic list that is not added to the target donor node.

In this embodiment of this application, the first donor node may indicate the relay node to release the context of the data traffic list that is not added to the target donor node, to save resources.

In a possible implementation, the method further includes: The first donor node receives a second request message from the second donor node. The second request message is used to request to establish an F1 connection between the relay node and the first donor node. The first donor node sends a second response message to the second donor node. The second response message includes configuration information used to establish the F1 connection.

In this embodiment of this application, after the relay node accesses the second donor node, the second donor node may help establish the F1 connection between the relay node and the first donor node, so that the relay node can quickly establish the F1 connection to the first donor node, to implement quick network access of the relay node, and provide a service for the relay node. This improves network performance.

In a possible implementation, the configuration information includes a key of the first donor node, and the key is used to establish the F1 connection.

In this embodiment of this application, the first donor node may send the key of the first donor node to the second donor node through the second response message, so that the second donor node sends the key to the relay node, and the relay node can establish the F1 connection to the first donor node based on the key.

In a possible implementation, the second request message includes at least one of the following: an Xn interface identifier allocated by the second donor node to the relay node, an IP address of the relay node in a topology corresponding to the second donor node, or a differentiated services code point (differentiated services code point, DSCP) or Flow-label information corresponding to the IP address. The second response message further includes an Xn interface identifier allocated by the first donor node to the relay node and/or an IP address of the first donor node.

In this embodiment of this application, the second request message includes one or more of the Xn interface identifier allocated by the second donor node to the relay node, the IP address of the relay node in the topology corresponding to the second donor node, and the differentiated services code point DSCP or Flow label flow label information corresponding to the IP address, so that the relay node can be identified between the first donor node and the second donor node, and the first donor node can send downlink data to the relay node based on the IP address and the DSCP or the flow label information.

In a possible implementation, when there is a connection between the first donor node and the relay node, the first donor node maintains the Xn interface identifier between the first donor node and the relay node.

In this embodiment of this application, the Xn interface identifier may be an Xn application protocol identity (Xn application protocol identity, XnAP ID). When there is the connection between the first donor node and the relay node, the first donor node retains the XnAP ID between the first donor node and an MT of the relay node. For example, when there is an RRC connection between the first donor node and the MT of the relay node, the first donor node retains the XnAP ID between the first donor node and the MT of the relay node. Alternatively, when there is an F1 connection between the first donor node and a DU of the relay node, the first donor node retains the XnAP ID between the first donor node and the MT of the relay node. In this application, the XnAP ID is an identifier identifying the relay node between the first donor node and another donor node (for example, the second donor node), and the first donor node retains the XnAP ID between the first donor node and the relay node, so that the first donor node can perform interaction for the relay node.

In a possible implementation, that the first donor node determines the target donor node and the migration mode in the list of the target donor node based on a connection relationship includes: The first donor node determines at least one master donor node in the list of the target donor node based on the connection relationship. The master donor node is configured to manage an F1 connection of a donor node set. When there is an RRC connection between the relay node and any donor node in the donor node set, the F1 connection of the relay node is terminated at the master donor node. The first donor node determines the target donor node in the at least one master donor node.

In this embodiment of this application, the target donor node may be the master donor node. The first donor node determines one of the at least one master donor node in the list of the target donor node as the target donor node, so that the relay node can migrate to the master donor node. This can prevent the F1 connection of the relay node from being migrated to a master donor node corresponding to the target donor node after the F1 connection is migrated to the target donor node, to reduce migration of the F1 connection of the relay node between the different donor nodes. This further reduces a service interruption delay of the relay node, and ensures stability of service communication between the relay node and a network.

In a possible implementation, the first donor node is the master donor node, and the method further includes:
The first donor node sends fourth indication information. The fourth indication information indicates that the first donor node is the master donor node.

In this embodiment of this application, the first donor node may be the master donor node, and the second donor node may be one donor node in the donor node set managed by the first donor node. The first donor node may send the fourth indication information, so that a donor node (for example, the second donor node) in the donor node set determines that the first donor node is the master donor node.

According to a second aspect, an embodiment of this application provides a communication method. The method may be performed by a second donor node, or may be performed by a component (for example, a chip or a circuit) of the second donor node. This is not limited herein. The method includes the following steps.

The second donor node sends a first message to a first donor node. The first message includes a list of a target donor node to which a relay node is to migrate. There is an F1 connection between the first donor node and the relay node, and there is a radio resource control RRC connection between the second donor node and the relay node. The first message indicates that the first donor node is to determine a target donor node and a migration mode in the list of the target donor node. The migration mode includes a first migration mode or a second migration mode. The first migration mode includes migrating the F1 connection of the relay node to the target donor node, and the second migration mode includes maintaining the F1 connection between the relay node and the first donor node. The second donor node receives a second message from the first donor node. The second message includes first indication information, and the first indication information indicates the target donor node and the migration mode.

In this embodiment of this application, when determining that the relay node needs to perform migration, the second donor node may report, to the first donor node through the first message, the list of the target donor node to which the relay node can migrate. The first donor node determines, in the list of the target donor node, the target donor node to which the relay node can migrate and the migration mode used by the relay node to migrate to the target donor node. The F1 connection of the relay node is terminated at the first donor node. The first donor node determines the target donor node and the migration mode, so that the relay node can migrate to a proper target donor node, and the relay node can migrate between different donor node topologies more properly.

In a possible implementation, the method further includes: The second donor node sends a fifth message to the relay node. The fifth message includes the first indication information, and the fifth message indicates that the relay node is to migrate to the target donor node based on the migration mode.

In this embodiment of this application, the second donor node indicates, through the fifth message, the relay node to migrate to the target donor node in the migration mode, so that the relay node migrates between the different donor node topologies.

In a possible implementation, the migration mode includes the second migration mode, there is an Xn connection between the first donor node and a central unit CU of the target donor node, and there is an internet protocol IP network connection between the first donor node and a distributed unit DU of the target donor node.

In this embodiment of this application, the migration mode is the second migration mode. To be specific, the RRC connection of the relay node is migrated from the second donor node to the target donor node, and the relay node maintains the F1 connection to the first donor node. When there is the Xn connection between the first donor node and the CU of the target donor node, and there is the IP network connection between the first donor node and the DU of the target donor node, the relay node can maintain the F1 connection between the first donor node and the relay node after migrating to the target donor node. Therefore, the relay node migrates to the target donor node based on the second migration mode, so that migration of the F1 connection of the relay node between the different donor nodes can be reduced, thereby reducing a service interruption delay of the relay node, and ensuring stability of service communication between the relay node and a network.

In a possible implementation, the migration mode includes the first migration mode, there is an NG connection between the first donor node and an access and mobility management function AMF, and there is the NG connection between the target donor node and the AMF.

In this embodiment of this application, the migration mode includes the first migration mode. To be specific, both the RRC connection and the F1 connection of the relay node are migrated to the target donor node. There is the NG connection between the first donor node and the AMF, and there is the NG connection between the target donor node and the AMF. In other words, the first donor node and the target donor node are reachable to each other through NG interfaces via the AMF serving as a relay. The relay node migrates to the target donor node based on the first migration mode, so that data traffic of the relay node can be migrated to the target donor node after the relay node migrates to the target donor node.

In a possible implementation, the method further includes: The second donor node sends a third message to the first donor node. The third message indicates that the first donor node is to initiate a migration procedure for the data traffic of the relay node to the target donor node.

In this embodiment of this application, after the relay node migrates to the target donor node, the second donor node may indicate, through the third message, the first donor node to initiate the migration procedure for the data traffic of the relay node, so that the data traffic of the relay node can be migrated from a topology corresponding to the second donor node to a topology corresponding to the target donor node.

In a possible implementation, the third message includes at least one of the following: an Xn interface identifier allocated by the target donor node to the relay node, an identifier of the target donor node, or an IP address of the relay node in a topology corresponding to the target donor node.

In this embodiment of this application, the topology corresponding to the target donor node is a topology managed by the target donor node. The third message may include the Xn interface identifier allocated by the target donor node to the relay node, so that the first donor node and the target donor node can identify the relay node. Alternatively, the third message includes the identifier of the target donor node, so that the first donor node can determine the target donor node. Alternatively, the third message includes the IP address of the relay node in the topology corresponding to the target donor node, so that data of the first donor node can be routed to the relay node.

In a possible implementation, the method further includes: The second donor node sends a third request message to the target donor node. The third request message is used to request migration of data traffic of the relay node from the target donor node. The second donor node receives a third response message from the target donor node. The third response message includes a migration result of migrating the data traffic of the relay node to the target donor node, and the migration result includes a data traffic list that is added to the target donor node and/or a data traffic list that is not added to the target donor node. The second donor node sends a fourth message to the first donor node. The fourth message includes the migration result.

In this embodiment of this application, the second donor node may initiate a migration procedure for the data traffic of the relay node. After migrating the data traffic of the relay node to the target donor node, the second donor node feeds back the migration result to the first donor node through the fourth message, so that the first donor node can learn of the migration result.

In a possible implementation, the method further includes: The second donor node receives second indication information from the first donor node. The second indication information indicates that the second donor node is to initiate a migration procedure for the data traffic to the target donor node.

In this embodiment of this application, the first donor node may indicate, through the second indication information, the second donor node to autonomously initiate the migration procedure for the data traffic of the relay node, so that the data traffic of the relay node can be migrated from a topology corresponding to the second donor node to a topology corresponding to the target donor node.

In a possible implementation, the third request message includes an Xn interface identifier allocated by the first donor node to the relay node and an identifier of the first donor node.

In this embodiment of this application, the third request message may include the Xn interface identifier allocated by the first donor node to the relay node, so that the target donor node and the first donor node can identify the relay node. In addition, the third request message includes the identifier of the first donor node, so that the target donor node can determine the first donor node.

In a possible implementation, the method further includes: The second donor node sends a second request message to the first donor node. The second request message is used to request to establish an F1 connection between the relay node and the first donor node. The second donor node receives a second response message from the first donor node. The second response message includes configuration information used to establish the F1 connection.

In this embodiment of this application, after the relay node accesses the second donor node, the second donor node may help establish the F1 connection between the relay node and the first donor node, so that the relay node can quickly establish the F1 connection to the first donor node, to implement quick network access of the relay node, and provide a service for the relay node. This improves network performance.

In a possible implementation, the method further includes: The second donor node sends a sixth message to the relay node based on the second response message. The sixth message includes the configuration information.

In this embodiment of this application, the second donor node may send, to the relay node through the sixth message, the configuration information used to establish the F1 connection, so that the relay node can establish the F1 connection to the first donor node based on the configuration information.

In a possible implementation, the configuration information includes a key of the first donor node, and the key is used to establish the F1 connection.

In this embodiment of this application, the first donor node may send the key of the first donor node to the second donor node through the second response message, so that the second donor node sends the key to the relay node, and the relay node can establish the F1 connection to the first donor node based on the key.

In a possible implementation, the second request message includes at least one of the following: an Xn interface identifier allocated by the second donor node to the relay node, an IP address of the relay node in a topology corresponding to the second donor node, or a differentiated services code point DSCP or Flow label flow-label information corresponding to the IP address. The second response message further includes the Xn interface identifier allocated by the first donor node to the relay node and/or the IP address of the first donor node.

In this embodiment of this application, the second request message includes one or more of the Xn interface identifier allocated by the second donor node to the relay node, the IP address of the relay node in the topology corresponding to the second donor node, and the differentiated services code point DSCP or Flow label flow label information corresponding to the IP address, so that the relay node can be identified between the first donor node and the second donor node, and the first donor node can send downlink data to the relay node based on the IP address and the DSCP or the flow label information.

In a possible implementation, the first donor node is a master donor node, and the master donor node is configured to manage an F1 connection of a donor node set. When there is an RRC connection between the relay node and any donor node in the donor node set, the F1 connection of the relay node is terminated at the master donor node. The method further includes: The second donor node receives fourth indication information. The fourth indication information indicates that the first donor node is the master donor node.

In this embodiment of this application, the first donor node may be the master donor node, and the second donor node may be one donor node in the donor node set managed by the first donor node. The second donor node may receive the fourth indication information sent by the first donor node, so that the second donor node determines, based on the fourth indication information, that the first donor node is the master donor node.

According to a third aspect, an embodiment of this application provides a communication method. The method may be performed by a relay node, or may be performed by a component (for example, a chip or a circuit) of the relay node. This is not limited herein. The method includes the following steps.

A relay node receives a fifth message from a second donor node. The fifth message includes first indication information. The first indication information indicates a target donor node and a migration mode. There is a radio resource control RRC connection between the relay node and the second donor node, and there is an F1 connection between the relay node and a first donor node. The migration mode includes a first migration mode or a second migration mode. The first migration mode includes migrating the F1 connection of the relay node to the target donor node, and the second migration mode includes maintaining the F1 connection between the relay node and the first donor node.

The relay node migrates to the target donor node based on the fifth message.

In this embodiment of this application, the target donor node and the migration mode are determined by the first donor node. The F1 connection of the relay node is terminated at the first donor node. The first donor node determines the target donor node and the migration mode, so that the relay node can migrate to a proper target donor node, and the relay node can migrate between different donor node topologies more properly. The second donor node indicates, through the fifth message, the relay node to migrate to the target donor node in the migration mode, so that the relay node migrates between the different donor node topologies.

In a possible implementation, the migration mode includes the second migration mode, there is an Xn connection between the first donor node and a central unit CU of the target donor node, and there is an internet protocol IP network connection between the first donor node and a distributed unit DU of the target donor node. That the relay node migrates to the target donor node based on the fifth message includes: The relay node releases the RRC connection to the second donor node, and establishes the RRC connection to the target donor node.

In this embodiment of this application, the migration mode is the second migration mode. To be specific, the RRC connection of the relay node is migrated from the second donor node to the target donor node, and the relay node maintains the F1 connection to the first donor node. When there is the Xn connection between the first donor node and the CU of the target donor node, and there is the IP network connection between the first donor node and the DU of the target donor node, the relay node can maintain the F1 connection between the first donor node and the relay node after migrating to the target donor node. Therefore, the relay node migrates to the target donor node based on the second migration mode, so that migration of the F1 connection of the relay node between the different donor nodes can be reduced, thereby reducing a service interruption delay of the relay node, and ensuring stability of service communication between the relay node and a network.

In a possible implementation, the migration mode includes the first migration mode, there is an NG connection between the first donor node and an access and mobility management function AMF, and there is an NG connection between the target donor node and the AMF. That the relay node migrates to the target donor node based on the fifth message includes: The relay node releases the RRC connection to the second donor node, and establishes the RRC connection to the target donor node. The relay node releases the F1 connection to the first donor node, and establishes the F1 connection to the target donor node.

In this embodiment of this application, the migration mode includes the first migration mode. To be specific, both the RRC connection and the F1 connection of the relay node are migrated to the target donor node. There is the NG connection between the first donor node and the AMF, and there is the NG connection between the target donor node and the AMF. In other words, the first donor node and the target donor node are reachable to each other through NG interfaces via the AMF serving as a relay. The relay node migrates to the target donor node based on the first migration mode, so that data traffic of the relay node can be migrated to the target donor node after the relay node migrates to the target donor node.

In a possible implementation, the method further includes: The relay node receives third indication information from the first donor node. The third indication information indicates that the relay node is to release a context corresponding to a data traffic list that is not added to the target donor node. The relay node releases, based on the third indication information, the context corresponding to the data traffic list that is not added to the target donor node.

In this embodiment of this application, the first donor node may indicate the relay node to release the context of the data traffic list that is not added to the target donor node, to save resources.

In a possible implementation, the method further includes: The relay node receives a sixth message from the second donor node. The sixth message includes configuration information used to establish the F1 connection. The relay node establishes the F1 connection to the first donor node based on the configuration information.

In this embodiment of this application, after the relay node accesses the second donor node, the second donor node may help establish the F1 connection between the relay node and the first donor node. The relay node can quickly establish the F1 connection to the first donor node based on the configuration information, to implement quick network access of the relay node, and provide a service for the relay node. This improves network performance.

In a possible implementation, the configuration information includes a key of the first donor node, and the key is used to establish the F1 connection.

In this embodiment of this application, the relay node can establish the F1 connection to the first donor node based on the key of the first donor node, to implement the quick network access of the relay node.

In a possible implementation, the sixth message further includes an IP address of the first donor node.

In this embodiment of this application, the sixth message further includes the IP address of the first donor node, so that the relay node can send uplink data to the first donor node based on the IP address.

According to a fourth aspect, an embodiment of this application provides a communication apparatus, configured to perform the method according to any one of the first aspect or the possible implementations. The communication apparatus includes a unit configured to perform the method according to any one of the first aspect or the possible implementations.

According to a fifth aspect, an embodiment of this application provides a communication apparatus, configured to perform the method according to any one of the second aspect or the possible implementations. The communication apparatus includes a unit configured to perform the method according to any one of the second aspect or the possible implementations.

According to a sixth aspect, an embodiment of this application provides a communication apparatus, configured to perform the method according to any one of the third aspect or the possible implementations. The communication apparatus includes a unit configured to perform the method according to any one of the third aspect or the possible implementations.

According to a seventh aspect, an embodiment of this application provides a communication apparatus. The communication apparatus includes a processor, configured to perform the method according to any one of the first aspect or the possible implementations. Alternatively, the processor is configured to execute a program stored in a memory. When the program is executed, the method according to any one of the first aspect or the possible implementations is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to: receive a signal or send a signal.

According to an eighth aspect, an embodiment of this application provides a communication apparatus. The communication apparatus includes a processor, configured to perform the method according to any one of the second aspect or the possible implementations. Alternatively, the processor is configured to execute a program stored in a memory. When the program is executed, the method according to any one of the second aspect or the possible implementations is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to: receive a signal or send a signal.

According to a ninth aspect, an embodiment of this application provides a communication apparatus. The communication apparatus includes a processor, configured to perform the method according to any one of the third aspect or the possible implementations. Alternatively, the processor is configured to execute a program stored in a memory. When the program is executed, the method according to any one of the third aspect or the possible implementations is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to: receive a signal or send a signal.

According to a tenth aspect, an embodiment of this application provides a communication apparatus. The communication apparatus includes a logic circuit and an interface. The logic circuit is coupled to the interface. The interface is configured to input a first message and output a second message. The logic circuit is configured to determine a target donor node and a migration mode.

It may be understood that for descriptions of the first message, the second message, the target donor node, and the migration mode, refer to the method shown in any one of the first aspect or the possible implementations. Details are not described herein again.

According to an eleventh aspect, an embodiment of this application provides a communication apparatus. The communication apparatus includes a logic circuit and an interface. The logic circuit is coupled to the interface. The interface is configured to output a first message and input a second message.

It may be understood that for descriptions of the first message, the second message, a target donor node, and a migration mode, refer to the method shown in any one of the second aspect or the possible implementations. Details are not described herein again.

According to a twelfth aspect, an embodiment of this application provides a communication apparatus. The communication apparatus includes a logic circuit and an interface. The logic circuit is coupled to the interface. The interface is configured to input a fifth message. The logic circuit is configured to perform migration to a target donor node.

It may be understood that for descriptions of the first message, the second message, the target donor node, and a migration mode, refer to the method shown in any one of the third aspect or the possible implementations. Details are not described herein again.

According to a thirteenth aspect, an embodiment of this application provides a computer-readable storage medium. The computer-readable storage medium is configured to store a computer program. When the computer program runs on a computer, the method according to any one of the first aspect or the possible implementations of the first aspect is performed, or the method according to any one of the second aspect or the possible implementations of the second aspect is performed, or the method according to any one of the third aspect or the possible implementations of the third aspect is performed.

According to a fourteenth aspect, an embodiment of this application provides a computer program product. The computer program product includes a computer program or computer code. When the computer program product runs on a computer, the method according to any one of the first aspect or the possible implementations of the first aspect is performed, or the method according to any one of the second aspect or the possible implementations of the second aspect is performed, or the method according to any one of the third aspect or the possible implementations of the third aspect is performed.

According to a fifteenth aspect, an embodiment of this application provides a communication system. The communication system includes a first donor node, a second donor node, and a relay node. The first donor node is configured to perform the method shown in any one of the first aspect or the possible implementations of the first aspect. The second donor node is configured to perform the method shown in any one of the second aspect or the possible implementations of the second aspect. The relay node is configured to perform the method shown in any one of the third aspect or the possible implementations of the third aspect.

### BRIEF DESCRIPTION OF DRAWINGS

The following describes accompanying drawings used in embodiments of this application.
FIG. 1 is a diagram of a structure of an IAB system according to an embodiment of this application;
FIG. 2 is a diagram of an IAB network architecture according to an embodiment of this application;
FIG. 3 is a diagram of a structure of an IAB network topology according to an embodiment of this application;
FIG. 4 is a diagram of an architecture of a communication system according to an embodiment of this application;
FIG. 5 is a flowchart of a transport migration management process according to an embodiment of this application;
FIG. 6 is a diagram of an IAB network scenario according to an embodiment of this application;
FIG. 7 is a diagram of an m-CU scenario according to an embodiment of this application;
FIG. 8 is a diagram of a communication architecture in an m-CU scenario according to an embodiment of this application;
FIG. 9 is a diagram of a structure of a communication system according to an embodiment of this application;
FIG. 10 is a diagram of interaction of a communication method according to an embodiment of this application;
FIG. 11 is a diagram of interaction of another communication method according to an embodiment of this application;
FIG. 12 is a diagram of interaction of still another communication method according to an embodiment of this application;
FIG. 13 is a diagram of interaction of still another communication method according to an embodiment of this application;
FIG. 14 is a diagram of interaction of still another communication method according to an embodiment of this application;
FIG. 15 is a diagram of a structure of a communication apparatus according to an embodiment of this application;
FIG. 16 is a diagram of a structure of another communication apparatus according to an embodiment of this application; and
FIG. 17 is a diagram of a structure of another communication apparatus according to an embodiment of this application.

### DESCRIPTION OF EMBODIMENTS

In the specification, claims, and accompanying drawings of this application, terms "first", "second", and the like are merely intended to distinguish between different objects, but do not limit a sequence, a time sequence, a priority, or an importance degree of a plurality of objects. In embodiments of this application, "a plurality of" refers to two or more. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices. In addition, the character "/" usually indicates an "or" relationship between associated objects.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that the embodiments described herein may be combined with other embodiments.

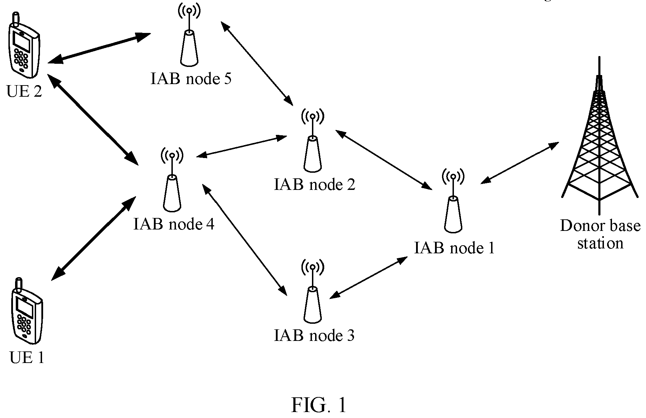

FIG. 1 is an example of a structure of an IAB system according to an embodiment of this application. In an IAB network, a relay node RN (relay node), which is alternatively referred to as an IAB node (IAB node), may provide a radio access service for a user equipment (user equipment, UE). Service data of the UE is transmitted by the IAB node that is connected to an IAB donor (IAB donor) over a wireless backhaul link. In this application, the IAB donor may also be referred to as a donor node (donor node) or a donor base station (DgNB, donor gNodeB). The IAB node includes a mobile termination (mobile termination, MT) part and a distributed unit (distributed unit, DU) part. When facing a parent node of the IAB node, the IAB node may serve as a terminal device, that is, a role of the MT. When facing a child node of the IAB node (the child node may be another IAB node or a common UE), the IAB node may be considered as a network device, that is, a role of the DU. The donor base station DgNB may be an access network element having a complete base station function, or may be an access network element in a form in which a central unit (central unit, CU) and a distributed unit (distributed unit, DU) are separated. The donor base station is connected to a core network (for example, connected to a 5G core network, 5GC) network element that provides a service for the UE, and provides a wireless backhaul function for the IAB node. For ease of description, the central unit of the donor node is briefly referred to as a donor CU (or directly referred to as a CU), and the distributed unit of the donor node is briefly referred to as a donor DU. The donor CU may alternatively be in a form in which a control plane (control plane, CP) is separated from a user plane (user plane, UP). For example, the CU may include one CU-CP and one CU-UP (or more CU-UPs).

The IAB node is connected to the core network via the IAB donor. For example, in a 5G standalone (standalone, SA) architecture, the IAB node is connected to the 5GC via the IAB donor. In a dual connectivity (dual connectivity, DC) or multi-connectivity (multi-connectivity, MC) 5G architecture (for example, a non-standalone (non-standalone, NSA) scenario or an NR-DC scenario), on a main path, the IAB node may be connected to an evolved packet core (evolved packet core, EPC) via an evolved base station (evolved NodeB, eNB), or may be connected to the 5G core network via the IAB donor.

In the IAB network, one or more IAB nodes may be included on a transmission path between the UE and the IAB donor. Each IAB node needs to maintain a wireless backhaul link to the parent node and a wireless link to the child node. If the child node of the IAB node is the UE, there is a wireless access link between the IAB node and the child node (namely, the UE) of the IAB node. If the child node of the IAB node is the another IAB node, there is a wireless backhaul link between the IAB node and the child node (namely, the another IAB node) of the IAB node. Refer to FIG. 1. On a path "UE 1→IAB node 4→IAB node 3→IAB node 1→IAB donor", the UE 1 accesses the IAB node 4 over a wireless access link, the IAB node 4 is connected to the IAB node 3 over a wireless backhaul link, the IAB node 3 is connected to the IAB node 1 over a wireless backhaul link, and the IAB node 1 is connected to the IAB donor node over a wireless backhaul link.

In this embodiment of this application, an access IAB node is an IAB node accessed by the UE, and an intermediate IAB node is an IAB node that provides a wireless backhaul service for the terminal or the IAB node. For example, refer to FIG. 1. On the path "UE 1→IAB node 4→IAB node 3→IAB node 1→IAB donor", the IAB node 4 is an access IAB node, and the IAB node 3 and the IAB node 1 are intermediate IAB nodes. It should be noted that an IAB node is an access IAB node for a terminal that accesses the IAB node, and is an intermediate IAB node for another terminal that accesses another IAB node. Therefore, whether an IAB node is specifically an access IAB node or an intermediate IAB node is not fixed and needs to be determined based on a specific application scenario.

In the IAB network, one IAB donor may be connected to one or more IAB nodes and one or more UEs. In FIG. 1, an example in which two UEs and five IAB nodes are included is used. The two UEs are the UE 1 and a UE 2, and the five IAB nodes are the IAB node 1 to an IAB node 5. It should be understood that, in FIG. 1, a thick line represents an access link, and a thin line represents a backhaul link. The UE 2 may be connected to a donor base station via the IAB node 5, the IAB node 2, and the IAB node 1. The UE 2 may alternatively be connected to the donor base station via the IAB node 4, the IAB node 2, and the IAB node 1. The UE 2 may alternatively be connected to the donor base station via the IAB node 4, the IAB node 3, and the IAB node 1. The UE 1 may be connected to the donor base station via the IAB node 4, the IAB node 3, and the IAB node 1. The UE 1 may be connected to the donor base station via the IAB node 4, the IAB node 2, and the IAB node 1.

It should be noted that a communication system shown in FIG. 1 is merely an example, and does not constitute a limitation on an application scenario used in embodiments of this application. It should be understood that the IAB node is used in embodiments of this application only for description. This does not indicate that solutions in embodiments of this application are used only in a new radio (new radio, NR) scenario.

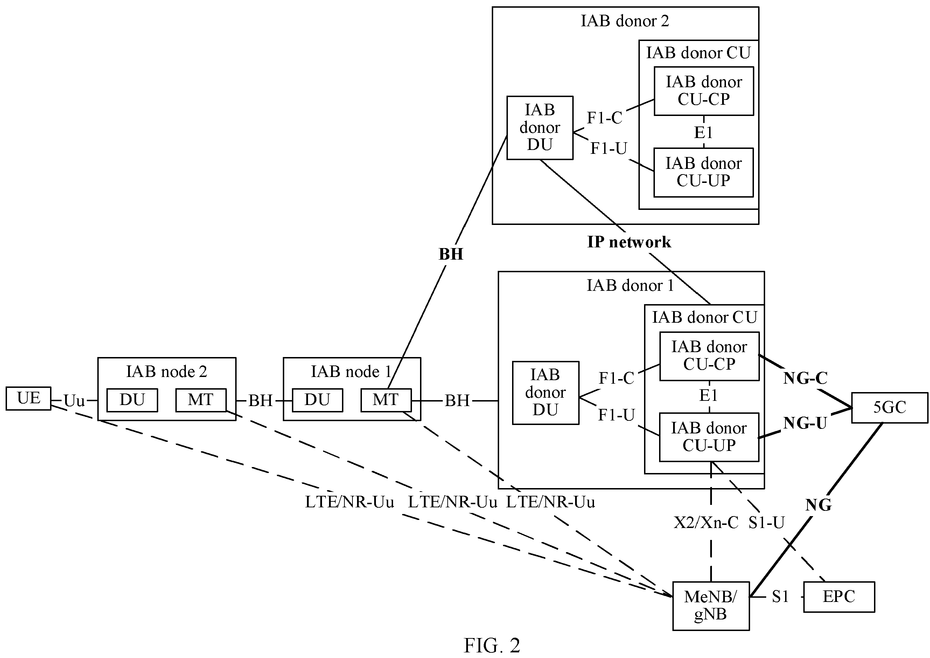

A communication method provided in embodiments of this application may be applied to an IAB network, including a standalone (standalone, SA) IAB network and a non-standalone (non-standalone, NSA) IAB network. The IAB node includes an MT part and a DU part. The IAB donor may be divided into a DU part and a CU part, and the CU may be further divided into a CU-CP part and a CU-UP part. FIG. 2 is an example of a diagram of an IAB network architecture according to an embodiment of this application. FIG. 2 shows an example in which an IAB node is connected to an IAB donor over a wireless backhaul link. In FIG. 2, an example in which one UE, two IAB nodes, and two IAB donors are included is used. The two IAB nodes are an IAB node 1 and an IAB node 2, and the two IAB nodes each include an MT part and a DU part. The two IAB donors are an IAB donor 1 and an IAB donor 2. Each IAB donor may be further divided into a DU part and a CU part, and the CU may be further divided into a CU-CP part and a CU-UP part. In FIG. 2, an MT of the IAB node 2 communicates with a DU of the IAB node 1 over a wireless backhaul (backhaul, BH) link (link), an MT of the IAB node 1 communicates with a DU of the IAB donor 1 over a wireless backhaul link, and the MT of the IAB node 1 communicates with a DU of the IAB donor 2 over a wireless backhaul link. A Uu interface is established between the UE and an IAB2-DU. An F1-C interface is established between an IAB donor DU and an IAB donor CU-CP, and an F1-U interface is established between the IAB donor DU and an IAB donor CU-UP. The DU of the IAB donor 2 is connected to the CU of the IAB donor 1 via an internet protocol (internet protocol, IP) network (network).

There is an F1 interface between a DU of each IAB node and a CU of the IAB donor. The F 1 interface may include two parts: a control plane part and a user plane part. The user plane part is maintained between the IAB-DU and the IAB donor CU-UP, and the control plane part is maintained between the IAB-DU and the IAB donor CU-CP. The F1 interface between the IAB-DU and the IAB donor CU is not shown in FIG. 2. Certainly, the F1 interface may also be referred to as an F1* interface. A name of the interface is not limited in embodiments of this application. In addition, an example in which the interface is referred to as the F1 interface is used in this specification.

The F1 interface may support a user plane protocol (F1-U/F1*-U) and a control plane protocol (F1-C/F1*-C). The user plane protocol includes one or more of the following protocol layers: a general packet radio service (general packet radio service, GPRS) tunneling protocol user plane (GPRS tunneling protocol user plane, GTP-U) protocol layer, a user datagram protocol (user datagram protocol, UDP) protocol layer, an IP protocol layer, or the like. The control plane protocol includes one or more of the following protocol layers: an F1 application protocol (F1 application protocol, F1AP) layer, a stream control transport protocol (stream control transport protocol, SCTP) layer, an IP protocol layer, or the like. Through the control plane of the F1/F1* interface, interface management, IAB-DU management, UE context related configuration, and the like may be performed between the IAB node and the IAB donor. Through the user plane of the F1/F1* interface, functions such as user plane data transmission and downlink transmission status feedback may be performed between the IAB node and the IAB donor.

When the IAB node works in an SA mode, the IAB node may establish single connectivity to one parent node, or may establish dual connectivity to two parent nodes. The two parent nodes may be controlled by a same IAB donor, or may be respectively controlled by different IAB donors. An F1 interface is established between the DU part of the IAB node and one IAB donor, and the IAB donor may be connected to a 5G core network, that is, a thick line part in FIG. 2. The IAB-donor-CU-CP is connected to a control plane network element (for example, an access and mobility management function) in the 5GC through an NG control plane interface (NG-C), and the IAB-donor-CU-UP is connected to a user plane network element (for example, a user plane function) in the 5GC through an NG user plane interface (NG-U).

When the IAB node works in NSA mode (or an evolved universal terrestrial radio access (evolved universal terrestrial radio access, E-UTRA) NR DC (E-UTRANR dual connectivity, EN-DC) mode), the IAB-donor-CU-UP may be connected to an EPC (for example, connected to a serving gateway (serving gateway, SGW)) through an S1 user plane interface (S1-U). There is an LTE Uu air interface connection between an MeNB and the MT of the IAB node, and there is an X2-C interface between the MeNB and the IAB-donor-CU-CP. The MeNB is connected to the EPC through an S1 interface (including an S1 interface user plane and an S1 interface control plane), that is, a dashed line part in FIG. 2.

In another possible case, the MeNB in FIG. 2 may alternatively be replaced with a 5G base station gNB. The LTE-Uu interface in FIG. 2 is correspondingly replaced with an NR-Uu interface. A user plane interface and/or a control plane interface may be established between the gNB and the 5GC. The gNB and the IAB-donor provide a dual connectivity service for the IAB node. The gNB may serve as a master base station of the IAB node or a secondary base station of the IAB node.

The foregoing is an example of an application scenario of the technical solutions in embodiments of this application. It should be understood that the technical solutions in embodiments of this application are not limited to being applied only to the network architecture shown in FIG. 2.

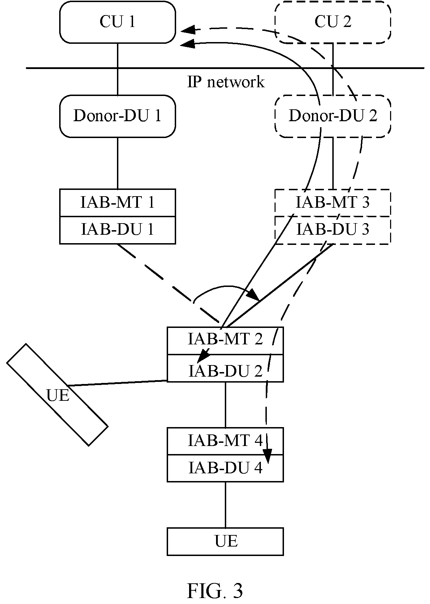

A boundary node in the IAB network may be referred to as a border IAB node, or referred to as a boundary node for short. The boundary node in the IAB network has the following characteristic: An IAB-donor-CU at which a DU of the boundary node is terminated is different from an IAB-donor-CU at which a DU of at least one parent node of the boundary node is terminated. Assuming that an IAB node in the IAB network has two parent nodes, a DU of the IAB node is terminated at the CU of the IAB-donor 1, a DU of one parent node of the IAB node is terminated at the CU of the IAB-donor 1, and a DU of the other parent node of the IAB node is terminated at the CU of the IAB-donor 2. In this case, the IAB node is a boundary node (for example, an IAB-node 2 in FIG. 3). For example, in the IAB network, to enhance network robustness and implement more refined load balancing and topology management, the boundary node may perform a partial migration (partial migration) process, that is, an MT (IAB-MT 2 in FIG. 3) of the boundary node is handed over from one parent node (IAB-node 1 in FIG. 3) to the other parent node (IAB-node 3 in FIG. 3). The two parent nodes belong to topologies controlled by different donor CUs. To be specific, the IAB-node 1 in FIG. 3 belongs to a topology (solid-line box part in FIG. 3) controlled by the donor-CU 1, and the IAB-node 3 belongs to a topology (dashed-line box part in FIG. 3) controlled by the donor-CU 2. In the partial migration process, an RRC connection of the IAB-MT 2 is migrated from the CU 1 to the CU 2, but an F1 connection of the IAB-DU 2 is still terminated at the CU 1 (as shown by a solid line arrow in FIG. 3), and is not migrated to the CU 2 together with the IAB-MT 2. It may be understood that, an F1 connection of a child node of an IAB node 2: an IAB node 4, may also be terminated at the CU 1 (as shown by a dashed line arrow in FIG. 3).

For example, an F1 interface of the IAB node 2 is terminated at the CU 1, and the IAB donor 1 may be referred to as an F1 terminating donor node (F1-terminating IAB-donor) of the IAB node 2. If the CU 2 has an RRC connection to the IAB node 2, but the F1 connection of the IAB node 2 is not terminated at the CU 2, the IAB donor 2 may be referred to as a non-F1 terminating IAB donor (non-F1-terminating IAB-donor) of the IAB node 2.

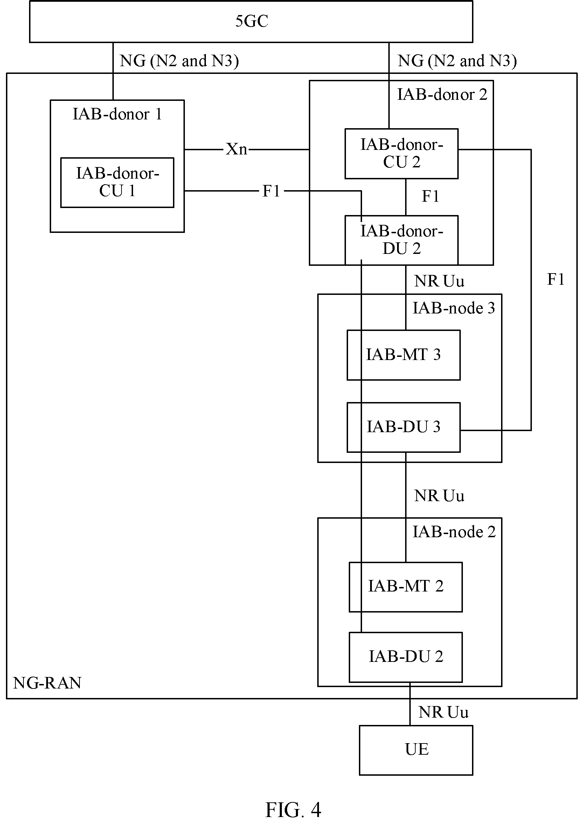

After the IAB node 2 performs the partial migration process, a system structure is shown in FIG. 4. An F1 connection of the IAB-DU 2 is terminated at the IAB donor CU 1, an NR Uu interface is established between the IAB-MT 2 and the IAB-DU 3, an F1 connection of the IAB-DU 3 is terminated at the IAB-donor-CU 2, an NR Uu interface is established between the IAB-MT 3 and the IAB-donor-DU 2, and an F1 interface is established between the IAB-donor-DU 2 and the IAB-donor-CU 2. An Xn interface is established between the IAB-donor-CU 1 and the IAB-donor-CU 2. NG interfaces (for example, N2 and N3) are established between the IAB-donor-CU 1 and a 5GC and between the IAB-donor-CU 2 and the 5GC.

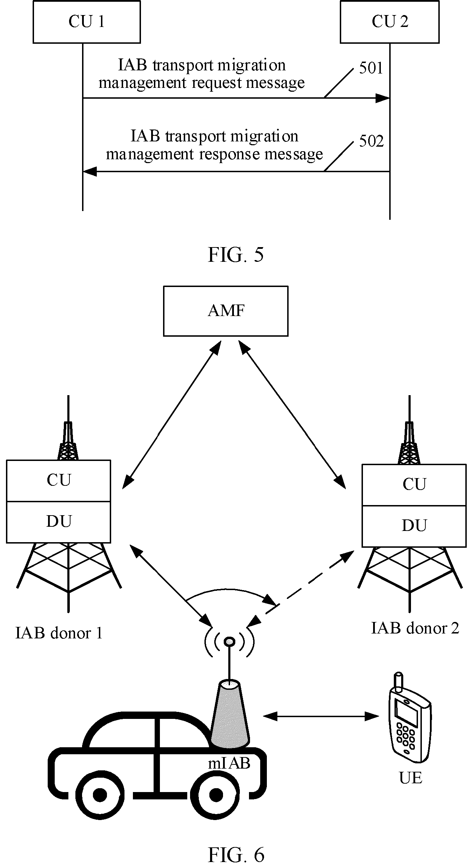

After the IAB node 2 migrates from a CU 1 topology to a CU 2 topology, to implement migration of data traffic of the IAB node 2 from the CU 1 topology to the CU 2 topology, an IAB transport migration management (IAB Transport Migration Management) process is introduced in the Release-17 standard (R17). To be specific, the CU 1 may perform an IAB transport migration management (IAB Transport Migration Management) process through the Xn interface between the CU 1 and the CU 2, to migrate the data traffic of the IAB node 2 to the CU 2. The IAB Transport Migration Management process is shown in FIG. 5, and specifically includes the following steps.

501: The CU 1 sends an IAB transport migration management request (IAB Transport Migration Management request) message to the CU 2. Correspondingly, the CU 2 receives the IAB transport migration management request message. The CU 1 is an F1-terminating IAB-donor of the IAB node 2, and the CU 2 is a non-F1-terminating IAB-donor of the IAB node 2. The IAB transport migration management request message is used to request to migrate the data traffic of the IAB node 2 to the CU 2.

502: The CU 2 sends an IAB transport migration management response (IAB Transport Migration Management response) message to the CU 1. Correspondingly, the CU 1 receives the IAB transport migration management response message. The IAB transport migration management response message is used to respond to the IAB transport migration management request message, to migrate the data traffic of the IAB node 2 to the CU 2.

For specific descriptions of the "IAB Transport Migration Management" process, refer to R17 TS 38.423. In the "IAB Transport Migration Management" process, the CUs exchange quality of service (quality of service, QoS) of the data traffic and corresponding integrated access and backhaul (integrated access and backhaul, BAP) configuration information, to implement offloading (offloading) of the data traffic. It is specified in the R17 standard that the process is initiated by the F1-terminating IAB-donor (namely, the CU 1 in FIG. 3) to the non-F1-terminating IAB-donor (namely, the CU 2 in FIG. 3).

In the IAB network, the IAB node is movable, for example, an in-vehicle IAB node. For example, the movable IAB node may be referred to as a mobile IAB node (mobile IAB node, mIAB). As shown in FIG. 6, in a moving process, the mIAB node may migrate from an IAB donor 1 to an IAB donor 2. Because a coverage area of a donor CU 1 is limited, an F1 connection between the donor CU 1 and an mIAB-DU cannot be maintained all the time. Therefore, the F1 connection of the mIAB-DU needs to be migrated from the donor-CU 1 to a donor-CU 2. In this scenario, a manner in which the mIAB-DU needs to migrate an RRC connection and the F1 connection from the donor-CU 1 to the donor-CU 2 may be referred to as full migration (full migration).

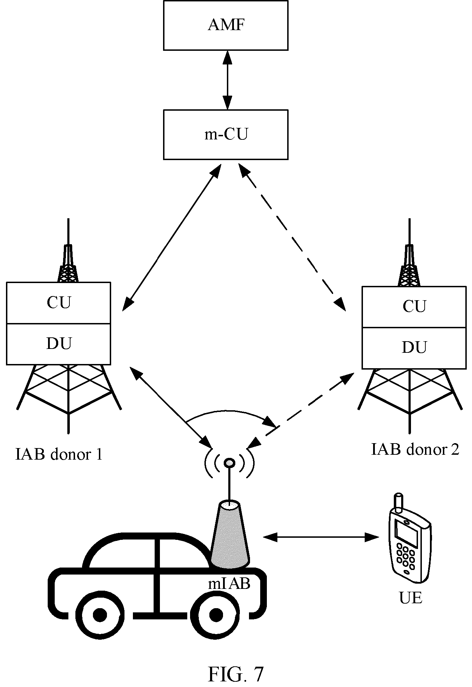

To avoid higher signaling overheads and system complexity caused by migration between donor-CUs, an embodiment of this application provides a communication architecture shown in FIG. 7. As shown in FIG. 7, the communication architecture includes a master CU (master CU, m-CU), an IAB donor 1, an IAB donor 2, and an mIAB. An F1 connection of the mIAB is terminated at the m-CU. The m-CU may be configured to manage an F1 connection of a CU set, and the CU set may be a set of CUs in a same area. For example, when there is an RRC connection between an IAB node and any CU in the CU set, an F1 connection of the IAB node is terminated at the m-CU. For example, the IAB donor 1 and the IAB donor 2 are in the CU set managed by the m-CU. In a moving process of the mIAB, an RRC connection of the mIAB may be migrated from the IAB donor 1 to the IAB donor 2, and the F1 connection of the mIAB is maintained in the m-CU. For example, the m-CU can maintain the F1 connection to an mIAB-DU within a larger area, so that the F1 connection of the mIAB-DU is maintained in the m-CU when an mIAB-MT of the mIAB is handed over between different donor-CUs. That is, the mIAB node can perform partial migration within a larger range, to reduce replacement of donor-CUs connected through the F1.

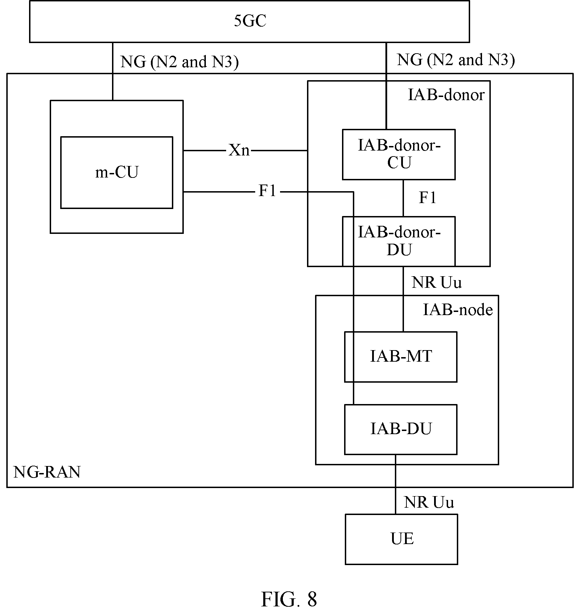

FIG. 8 is an example of a communication architecture in an m-CU scenario according to an embodiment of this application. As shown in FIG. 8, there is an Xn interface between an m-CU and an IAB-donor-CU, an F1 connection of an IAB-DU is terminated at the m-CU, and there is an NR Uu interface between an IAB-MT and an IAB-donor-DU. The IAB donor may be the IAB donor 1 or the IAB donor 2 in FIG. 7.

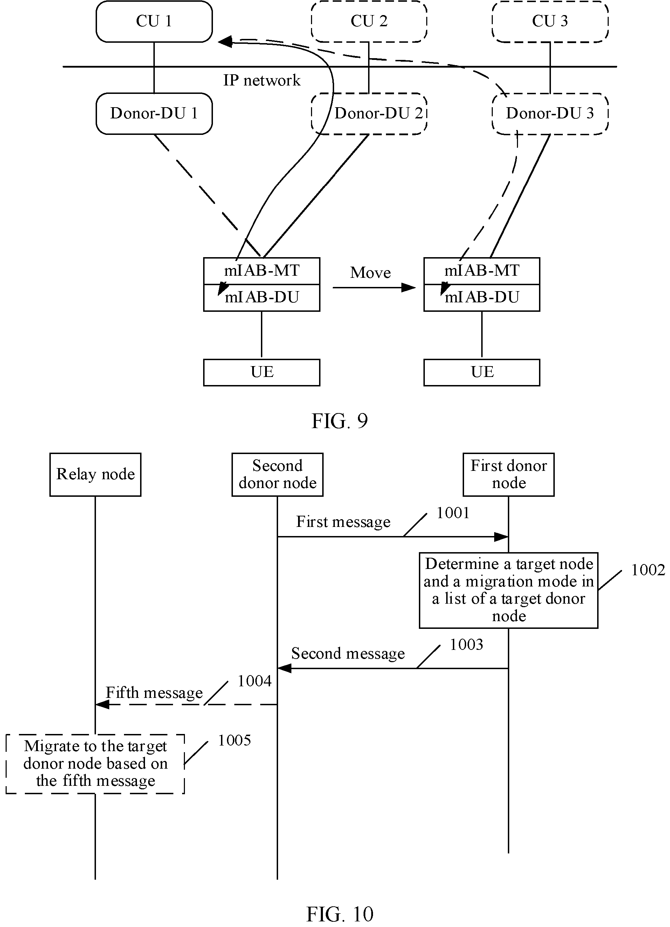

FIG. 9 is an example of another communication architecture according to an embodiment of this application. As shown in FIG. 9, there is an RRC connection between an mIAB-MT and an IAB donor DU 2, and an F1 connection of an mIAB-DU is terminated at an m-CU (as shown by a solid line arrow in FIG. 9). For example, an IAB donor CU 2 is one CU in a CU set managed by the m-CU. The mIAB is movable, and the mIAB may migrate between different donor-CU topologies in a moving process. For example, the mIAB migrates from the CU 2 to a CU3, that is, the mIAB-MT may migrate from the CU 2 to the CU 3. When the mIAB migrates between the donor-CU topologies, the mIAB may perform a partial migration process or a full migration process. Therefore, in this scenario, how the mIAB node migrates between the different donor-CU topologies is an urgent problem to be resolved.

According to the method provided in embodiments of this application, the IAB node can migrate between different topologies more properly. The method provided in embodiments of this application is applied to the communication system shown in FIG. 7, FIG. 8, or FIG. 9. Alternatively, the method provided in embodiments of this application is applied to a first donor node, a second donor node, and a relay node. The first donor node may be the IAB donor or the m-CU described above, the second donor node may be the IAB donor described above, and the relay node may be the IAB node or the mIAB described above.

FIG. 10 is a diagram of interaction of a communication method according to an embodiment of this application. As shown in FIG. 10, the method includes but is not limited to the following steps.

1001: A second donor node sends a first message. Correspondingly, a first donor node receives the first message. The first message includes a list of a target donor node to which a relay node is to migrate.

There is an F1 connection between the first donor node and the relay node, and there is an RRC connection between the second donor node and the relay node. That is, the F1 connection of the relay node is terminated at the first donor node, and the first donor node may be an F1-terminating IAB-donor of the relay node. There is the RRC connection between the second donor node and the relay node but the F1 connection of the relay node is not terminated at the second donor node, and the second donor node may be referred to as a non-F1-terminating IAB-donor of the relay node. For example, there is the RRC connection between an MT of the relay node and a CU of the second donor node, and there is the F1 connection between a DU of the relay node and a CU of the first donor node.

For example, when determining that the relay node needs to perform migration, the second donor node determines the list of the target donor node to which the relay node can migrate, and sends the first message to the first donor node, to indicate the first donor node to determine, in the list of the target donor node, the target donor node to which the relay node is to migrate.

For example, the first message further includes an Xn interface identifier allocated by the first donor node to the relay node and an Xn interface identifier allocated by the second donor node to the relay node. For example, the Xn interface identifier allocated by the first donor node to the relay node may be specifically an Xn application protocol identity (Xn application protocol identity, XnAP ID) allocated by the first donor node to the MT of the relay node, and the Xn interface identifier allocated by the second donor node to the relay node may be specifically an XnAP ID allocated by the second donor node to the MT of the relay node. The XnAP ID uniquely identifies the relay node on an Xn interface, so that the first donor node can quickly determine the relay node.

It may be understood that, when there is the F1 connection between the first donor node and the DU of the relay node, the first donor node retains the XnAP ID between the first donor node and the MT of the relay node, so that the first donor node can perform interaction for the relay node.

For example, the first donor node may be a master donor node, and the master donor node is configured to manage an F1 connection of a donor node set. When there is an RRC connection between the relay node and any donor node in the donor node set, the F1 connection of the relay node is terminated at the master donor node. The second donor node is one donor node in the donor node set managed by the first donor node. For example, the first donor node includes an m-CU. For example, a coverage area of the first donor node may be wider than a coverage area of the second donor node, or a deployment location of the first donor node is higher than that of the second donor node. The coverage area of the first donor node may be understood as a coverage area of a cell managed by the first donor node.

It may be understood that, in this application, the first donor node and the second donor node may be the IAB donors described above, or the first donor node and the second donor node may be understood as IAB donor CUs.

1002: The first donor node determines the target node and a migration mode in the list of the target donor node. The migration mode includes a first migration mode or a second migration mode. The first migration mode includes migrating the F1 connection of the relay node to the target donor node, and the second migration mode includes maintaining the F1 connection between the relay node and the first donor node.

For example, the first migration mode may be the full migration described above, and the second migration mode may be the partial migration described above.

In a possible implementation, that the first donor node determines the target donor node and a migration mode in the list of the target donor node includes: The first donor node determines the target donor node and the migration mode in the list of the target donor node based on a connection relationship. The connection relationship is at least one of the following connections between the first donor node and the donor node in the list of the target donor node: an Xn connection, an NG connection, and an internet protocol IP network connection.

For example, the Xn interface is an interface between CUs, and an NG interface is an interface between a CU and an AMF. In this embodiment of this application, the first donor node may determine the target donor node and the migration mode based on whether there is an Xn connection, NG connection, or internet protocol IP network connection relationship between the first donor node and the donor node in the list of the target donor node. For example, the first donor node determines whether there is an Xn interface between the first donor node and the donor node in the list of the target donor node, or the first donor node determines whether the first donor node and the donor node in the list of the target donor node are reachable to each other through NG interfaces via the AMF serving as a relay, or the first donor node determines whether there is an IP network connection between the first donor node and a distributed unit (distributed unit, DU) of the donor node in the list of the target donor node. The first donor node determines the target donor node and the migration mode in the list of the target donor node based on the connection relationship between the first donor node and the donor node in the list of the target donor node, so that data traffic of the relay node can be migrated to a topology corresponding to the target donor node after the relay node migrates to the target donor node.

For example, the first donor node may determine whether there is the Xn connection or the IP network connection between the first donor node and the donor node in the list of the target donor node, to select, in the list of the target donor node, a target donor node that has the Xn connection and the IP network connection to the first donor node. When there is the Xn connection between the first donor node and a CU of the target donor node, and there is the IP network connection between the first donor node and a DU of the target donor node, the relay node can maintain the F1 connection between the first donor node and the relay node after migrating to the target donor node. Therefore, in this case, the first donor node may determine that the migration mode in which the relay node migrates to the target donor node is the second migration mode. To be specific, the relay node maintains the F1 connection between the relay node and the first donor node, and the RRC connection of the relay node is migrated from the second donor node to the target donor node. Therefore, when there is the Xn connection between the first donor node and the CU of the target donor node, and there is the IP network connection between the first donor node and the DU of the target donor node, the first donor node determines that the migration mode is the second migration mode. This can reduce migration of the F1 connection of the relay node between different donor nodes, to reduce a service interruption delay of the relay node, and ensure stability of service communication between the relay node and a network.

For example, the first donor node may determine whether the first donor node and the donor node in the list of the target donor node are reachable to each other through the NG interfaces via the AMF serving as the relay, that is, the first donor node determines whether both the first donor node and the donor node in the list of the target donor node have NG connections to the AMF. The first donor node selects, in the list of the target donor node, a donor node that is reachable through the NG interfaces via the AMF serving as the relay as the target donor node to which the relay node is to migrate. When the first donor node selects, in the list of the target donor node, the target donor node that is reachable through the NG interfaces via the AMF serving as the relay, the relay node cannot maintain the F1 connection between the relay node and the first donor node after migrating to the target donor node. Therefore, in this case, the first donor node determines that the migration mode in which the relay node migrates to the target donor node is the first migration mode. To be specific, both the F1 connection and the RRC connection of the relay node are migrated to the target donor node. For example, in this case, the first donor node and the target donor node are reachable through the NG interfaces via the AMF serving as the relay, so that the data traffic of the relay node can be migrated by the AMF serving as the relay to the target donor node. In this way, the data traffic of the relay node is migrated from the second donor node to the target donor node.

For example, the first donor node may preferentially select, in the list of the target donor node, a donor node that can perform the second migration mode as the target donor node. To be specific, the first donor node preferentially selects, in the list of the target donor node, the donor node that has the Xn connection and the IP network connection to the first donor node as the target donor node. When the list of the target donor node does not include the donor node that has the Xn connection and the IP network connection to the first donor node, the first donor node selects, in the list of the target donor node, a donor node that is reachable to the first donor node through NG interfaces via a relay. The first donor node preferentially selects the donor node that can perform the second migration mode as the target donor node. This can reduce the migration of the F1 connection of the relay node between the different donor nodes, to reduce the service interruption delay of the relay node, and ensure the stability of the service communication between the relay node and the network.

In a possible implementation, that the first donor node determines the target donor node in the list of the target donor node based on a connection relationship includes: The first donor node determines at least one master donor node in the list of the target donor node based on the connection relationship. The first donor node determines the target donor node in the at least one master donor node.

For example, the first donor node determines, based on the connection relationship, at least one master donor node that is determined to meet the following connection relationship in the list of the target donor node: There is an Xn connection between the master donor node and the first donor node, there is an IP network connection between the master donor node and the first donor node, or the master donor node and the first donor node are reachable to each other through NG interfaces via the AMF serving as a relay.

For example, the first donor node may interact with the at least one master donor node based on an Xn interface between the first donor node and the at least one master donor node, to determine the at least one master donor node. For example, the first donor node may receive, through the Xn interface, master donor node indication information sent by the at least one master donor node. The master donor node indication information indicates that the at least one master donor node is a master donor node.

It may be understood that the first donor node may first determine the at least one master donor node in the list of the target donor node, and determine the target donor node in the at least one master donor node based on the connection relationship. Alternatively, the first donor node may first determine, based on the connection relationship, at least one donor node that meets the connection relationship, and select a master donor node from the at least one donor node as the target donor node.

In this embodiment of this application, the first donor node may determine, in the list of the target donor node, a master donor node that meets a condition as the target donor node, so that the relay node can migrate to the master donor node, to prevent the F1 connection of the relay node from being migrated to a master donor node corresponding to the target donor node after the F1 connection is migrated to the target donor node. This can reduce migration of the F1 connection of the relay node between the different donor nodes, to reduce the service interruption delay of the relay node, and ensure the stability of the service communication between the relay node and the network.

1003: The first donor node sends a second message. Correspondingly, the second donor node receives the second message. The second message includes first indication information, and the first indication information indicates the target donor node and the migration mode.

For example, the first indication information may include an identifier of the target donor node, or the first indication information may include an index of the target donor node in the list of the target donor node, to indicate the target donor node.

For example, the first indication information may indicate, by using a field, that the migration mode is the first migration mode or the second migration mode. For example, when a value of the field is a first value, the first indication information indicates the first migration mode; or when a value of the field is a second value, the first indication information indicates the second migration mode.

In some implementations, the method shown in FIG. 10 includes step 1004 and step 1005.

1004: The second donor node sends a fifth message. Correspondingly, the relay node receives the fifth message. The fifth message includes the first indication information, and the fifth message indicates that the relay node is to migrate to the target donor node based on the migration mode.

1005: The relay node migrates to the target donor node based on the fifth message.

In this embodiment of this application, the second donor node indicates, through the fifth message, the relay node to migrate to the target donor node in the migration mode, so that the relay node migrates between different donor node topologies.

In a possible implementation, the migration mode includes the second migration mode, and that the relay node migrates to the target donor node based on the fifth message includes: The relay node releases the RRC connection to the second donor node, and establishes an RRC connection to the target donor node. For example, the MT of the relay node is handed over from the second donor node to the target donor node, and the F1 connection of the DU of the relay node is maintained in the first donor node. In this implementation, the relay node maintains the F1 connection to the first donor node, so that the migration of the F1 connection of the relay node between the different donor nodes can be reduced.

In another possible implementation, the migration mode is the first migration mode, and that the relay node migrates to the target donor node based on the fifth message includes: The relay node releases the RRC connection to the second donor node, and establishes an RRC connection to the target donor node. The relay node releases the F1 connection to the first donor node, and establishes an F1 connection to the target donor node. For example, the MT of the relay node is handed over from the second donor node to the target donor node, and the F1 connection of the DU of the relay node is migrated from the first donor node to the target donor node. In this implementation, the first donor node and the target donor node are reachable to each other through the NG interfaces via the AMF serving as the relay, so that the data traffic of the relay node can be migrated from the second donor node to the target donor node.

In this embodiment of this application, when determining that the relay node needs to perform migration, the second donor node may report, to the first donor node through the first message, the list of the target donor node to which the relay node can migrate. Then, the first donor node determines, in the list of the target donor node, the target donor node to which the relay node can migrate and the migration mode used by the relay node to migrate to the target donor node. The F1 connection of the relay node is terminated at the first donor node. The first donor node determines the target donor node and the migration mode, so that the relay node can migrate to a proper target donor node, and the relay node can migrate between different donor node topologies more properly.

In some implementations, the list of the target donor node may be replaced with a target cell list. To be specific, the second donor node reports, to the first donor node through the first message, the target cell list to which the relay node can migrate. The first message indicates that the first donor node is to determine a target cell and a migration mode in the target cell list. The first donor node determines the target cell and the migration mode in the target cell list. The migration mode includes a first migration mode or a second migration mode. The first migration mode includes migrating the F1 connection of the relay node to a target donor node corresponding to the target cell, and the second migration mode includes maintaining the F1 connection between the relay node and the first donor node. The first donor node sends a second message to the second donor node. The second message includes first indication information, and the first indication information indicates the target cell and the migration mode.

For example, the first donor node determines the target cell based on a connection relationship between the first donor node and a donor node corresponding to a cell in the target cell list. The target cell list may include an identifier list of the target cell. For example, the identifier list of the target cell may include a physical cell identifier (physical cell identifier, PCI), a cell identity (cell identity), or the like of the target cell.

In this embodiment of this application, the first donor node may determine, for the relay node, the target cell to which the relay node is to migrate, so that the relay node can migrate to a more proper target cell.

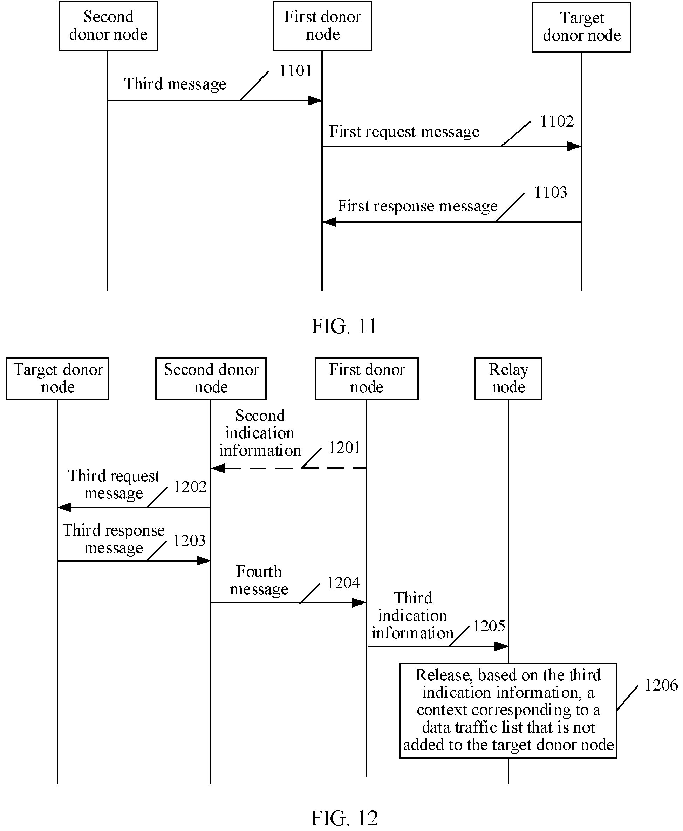

FIG. 11 is a diagram of interaction of another communication method according to an embodiment of this application. As shown in FIG. 11, the method includes but is not limited to the following steps.

1101: A second donor node sends a third message. Correspondingly, a first donor node receives the third message. The third message indicates that the first donor node is to initiate a migration procedure for data traffic of a relay node to a target donor node.

For example, after the second donor node determines that the relay node migrates from the second donor node to the target donor node, that is, an MT of the relay node is handed over from the second donor node to the target donor node, the second donor node sends the third message to the first donor node, to indicate the first donor node to initiate the migration procedure for the data traffic of the relay node to the target donor node. An F1 connection of a DU of the relay node is terminated at the first donor node, that is, the first donor node is an F1-terminating IAB-donor of the relay node.

For example, the migration procedure for the data traffic of the relay node may be the IAB Transport Migration Management process described above.

In some possible implementations, the third message includes at least one of the following: an Xn interface identifier allocated by the target donor node to the relay node, an identifier of the target donor node, or an IP address of the relay node in a topology corresponding to the target donor node.

For example, the Xn interface identifier allocated by the target donor node to the relay node may be an XnAP ID allocated by the target donor node to the MT of the relay node, and is used to identify the MT of the relay node between the first donor node and the target donor node.

For example, the third message may include an identifier of a target cell to which the MT of the relay node may be handed over or an identifier of the target donor node, so that the first donor node can determine, based on the identifier of the target cell or the identifier of the target donor node, the target cell or the target donor node to which the relay node migrates.

For example, the third message may include the IP address of the relay node in the topology corresponding to the target donor node, so that the first donor node can route data to the relay node based on the IP address.

For example, the third message may further include an XnAP ID allocated by the first donor node to the MT of the relay node and an XnAP ID allocated by the second donor node to the MT of the relay node.

1102: The first donor node sends a first request message. Correspondingly, the target donor node receives the first request message.

For example, the first donor node sends the first request message to the target donor node based on the third message. The first request message is used to request migration of the data traffic of the relay node.

For example, the third message may be an IAB transport migration management request message in the IAB Transport Migration Management process. The first donor node sends the "IAB Transport Migration Management" process to the target donor node, to migrate the data traffic of the relay node to the topology corresponding to the target donor node.

In some possible implementations, the relay node may indicate the first donor node to initiate the migration procedure for the data traffic of the relay node. For example, the DU of the relay node may indicate, through an F1 interface, the first donor node that the MT of the relay node is to be handed over to the target donor node. For example, after receiving a handover command (for example, a fifth message) sent by the second donor node, the MT of the relay node sends, to the DU of the relay node, information indicating that the MT of the relay node is to be handed over to the target node, so that the DU of the relay node can indicate, based on the F1 connection, the first donor node that the MT of the relay node is to be handed over to the target donor node and indicate the first donor node to initiate the migration procedure for the data traffic of the relay node.

1103: The target donor node sends a first response message. Correspondingly, the first donor node receives the first response message. The first response message is used to respond to the migration of the data traffic.

For example, the target donor node replies to the first donor node with the first response message, to determine to migrate the data traffic of the relay node to the topology corresponding to the target donor node.

For example, the first response message may be an IAB transport migration management response message in the IAB Transport Migration Management process.

In this embodiment of this application, after the relay node migrates to the target donor node, the second donor node may indicate, through the third message, the first donor node to initiate the migration procedure for the data traffic of the relay node, so that the data traffic of the relay node can be migrated from a topology corresponding to the second donor node to the topology corresponding to the target donor node.

FIG. 12 is a diagram of interaction of still another communication method according to an embodiment of this application. As shown in FIG. 12, the method includes but is not limited to the following steps.

In a possible implementation, the method shown in FIG. 12 includes step 1201.

1201: A first donor node sends second indication information. Correspondingly, a second donor node receives the second indication information. The second indication information indicates that the second donor node is to initiate a migration procedure for data traffic of a relay node to a target donor node.

For example, an F1 connection of the relay node is terminated at the first donor node, that is, the first donor node is an F1-terminating IAB-donor of the relay node, and the second donor node and the target donor node are non-F1-terminating donors of the relay node. The first donor node may indicate, through the second indication information, that the second donor node can autonomously initiate the migration procedure for the data traffic of the relay node. For example, the second donor node may autonomously determine, based on the second indication information, whether to initiate an IAB Transport Migration Management procedure to the target donor node. In other words, in this application, the second indication information may be used to enable the IAB Transport Migration Management procedure to be initiated between the non-F1-terminating donors (for example, the second donor node and the target donor node).

1202: The second donor node sends a third request message to the target donor node. Correspondingly, the target donor node receives the third request message. The third request message is used to request migration of the data traffic of the relay node from the target donor node.

For example, after determining that an MT of the relay node is handed over from the second donor node to the target donor node, the second donor node may send the migration procedure for the data traffic of the relay node to the target donor node. For example, the second donor node may initiate the IAB Transport Migration Management procedure to the target node. For example, the third request message may be an IAB transport migration management request message in the IAB Transport Migration Management procedure.

For example, the third request message includes an Xn interface identifier allocated by the first donor node to the relay node and an identifier of the first donor node. The Xn interface identifier allocated by the first donor node to the relay node may be specifically an XnAP ID allocated by the first donor node to the MT of the relay node, and is used to identify the MT of the relay node between the first donor node and the target donor node. The identifier of the first donor node may be used to enable the target donor node to quickly determine the first donor node.

For example, the third request message further includes a data traffic (Traffic) list that needs to be migrated.

For example, the third request message may further include an Xn interface identifier allocated by the second donor node to the relay node and an Xn interface identifier allocated by the target donor node to the relay node.

1203: The target donor node sends a third response message. Correspondingly, the second donor node receives the third response message. The third response message includes a migration result of migrating the data traffic of the relay node to the target donor node, and the migration result includes a data traffic list that is added to the target donor node and/or a data traffic list that is not added to the target donor node.

For example, the second donor node and the target donor node may exchange QoS of the data traffic of the relay node and corresponding BAP configuration information based on an Xn interface, to migrate the data traffic of the relay node. After migrating the data traffic, the target donor node replies to the second donor node with the migration result of the data traffic through the third response message.

For example, the third response message may further include the Xn interface identifier allocated by the second donor node to the relay node and the Xn interface identifier allocated by the target donor node to the relay node.

1204: The second donor node sends a fourth message. Correspondingly, the first donor node receives the fourth message. The fourth message includes the migration result of migrating the data traffic of the relay node to the target donor node.

For example, the migration result includes the data traffic list that is added to the target donor node and/or the data traffic list that is not added to the target donor node. The data traffic list that is added to the target donor node may include an IP address of the relay node in a topology corresponding to the target donor node and DSCP/Flow label information that needs to be filled in for downlink data corresponding to the relay node.

For example, the fourth message further includes at least one of the following: the Xn interface identifier allocated by the second donor node to the relay node, the Xn interface identifier allocated by the first donor node to the relay node, the Xn interface identifier allocated by the target donor node to the relay node, or the identifier of the target donor node.

In a possible implementation, the method shown in FIG. 12 may include step 1205 and step 1206.

1205: The first donor node sends third indication information to the relay node. Correspondingly, the relay node receives the third indication information. The third indication information indicates that the relay node is to release a context corresponding to a data traffic list that is not added to the target donor node.

1206: The relay node releases, based on the third indication information, the context corresponding to the data traffic list that is not added to the target donor node.

In this embodiment of this application, the second donor node may initiate the migration procedure for the data traffic of the relay node, so that the data traffic of the relay node can be migrated between topologies corresponding to different donor nodes. After migrating the data traffic of the relay node to the target donor node, the second donor node feeds back the migration result to the first donor node through the fourth message, so that the first donor node can learn of the migration result, and the first donor node indicates the relay node to release the context corresponding to the data traffic list that is not added to the target donor node, to save resources.

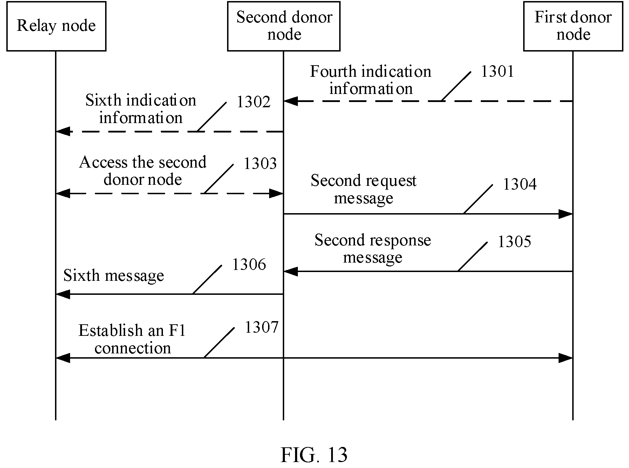

FIG. 13 is a schematic flowchart of still another communication method according to an embodiment of this application. As shown in FIG. 13, the method includes but is not limited to the following steps.

In a possible implementation, the method shown in FIG. 13 includes step 1301.

1301: A first donor node sends fourth indication information. Correspondingly, a second donor node receives the fourth indication information. The fourth indication information indicates that the first donor node is a master donor node.

For example, the first donor node is the master donor node, and the master donor node is configured to manage an F1 connection of a donor node set. When there is an RRC connection between the relay node and any donor node in the donor node set, an F1 connection of the relay node is terminated at the master donor node. The first donor node may send the fourth indication information, so that a donor node (for example, the second donor node) in the donor node set corresponding to the first donor node can determine, based on the fourth indication information, that the first donor node is the master donor node.

For example, the fourth indication information may include an identifier of the first donor node.

For example, the first donor node may send the fourth indication information through an Xn interface between the first donor node and the second donor node, or the first donor node may send the fourth indication information to an AMF through an NG interface. Correspondingly, the second donor node may receive the fourth indication information through the Xn interface between the second donor node and the first donor node, or the second donor node may receive the fourth indication information through the NG interface between the second donor node and the AMF.

For example, the first donor node may further send fifth indication information to the second donor node through the Xn interface, or the first donor node may send the fifth indication information to the AMF through the NG interface. The fifth indication information indicates an IAB support status of the first donor node. For example, the fifth indication information may indicate that the first donor node supports or does not support access of a mobile IAB node.

In some possible implementations, the method shown in FIG. 13 may include step 1302 and step 1303.

1302: The second donor node broadcasts sixth indication information. Correspondingly, the relay node receives the sixth indication information. The sixth indication information indicates an IAB support status of the second donor node.

For example, the IAB support status may include a mobile IAB support status. In other words, the sixth indication information indicates the mobile IAB node support status of the second donor node. For example, the sixth indication information indicates that the second donor node supports access of the mobile IAB node. After receiving the sixth indication information, the relay node may determine, based on the sixth indication information, to access the second donor node.

1303: The relay node accesses the second donor node.

For example, the relay node establishes an RRC connection to the second donor node. The relay node may be a mobile IAB node. The relay node may include indication information of the mobile IAB node in a message 5 (message, Msg5). Alternatively, the AMF sends mobile IAB authorized (Mobile IAB Authorized) information to the second donor node, to indicate that the relay node is a mobile IAB node.

1304: The second donor node sends a second request message to the first donor node. Correspondingly, the first donor node receives the second request message. The second request message is used to request to establish an F1 connection between the relay node and the first donor node.

For example, the second request message includes at least one of the following: an Xn interface identifier allocated by the second donor node to the relay node, an IP address of the relay node in a topology corresponding to the second donor node, and a differentiated services code point DSCP or Flow label flow label information corresponding to the IP address. In this way, the relay node can be identified between the first donor node and the second donor node, and the first donor node can send the downlink data to the relay node based on the IP address and the DSCP or the flow label information.

For example, the second request message may be an integration (Integration) request message for the relay node.

1305: The first donor node sends a second response message. Correspondingly, the second donor node receives the second response message. The second response message includes configuration information used to establish the F1 connection between the relay node and the first donor node.

For example, the configuration information includes a key (key-gNB, KgNB) of the first donor node, and the key is used to establish the F1 connection.

For example, the second response message further includes an Xn interface identifier allocated by the first donor node to the relay node and/or an IP address of the first donor node.

1306: The second donor node sends a sixth message to the relay node. Correspondingly, the relay node receives the sixth message. The sixth message includes the configuration information.

For example, the second donor node sends the sixth message to the relay node based on the second response message, so that the relay node can establish the F1 connection to the first donor node based on the configuration information.

For example, the sixth message further includes the IP address of the first donor node, so that the relay node can send uplink data to the first donor node based on the IP address.

1307: The relay node establishes the F1 connection to the first donor node based on the configuration information.

For example, a DU of the relay node establishes the F1 connection to the first donor node based on the configuration information. For example, after establishing a secure connection to the first donor node based on the KgNB, the DU of the relay node establishes the F1 interface to the first donor node.

In this embodiment of this application, after the relay node accesses the second donor node, the second donor node may help establish the F1 connection between the relay node and the first donor node, so that the relay node can quickly establish the F1 connection to the first donor node, to implement quick network access of the relay node, and provide a service for the relay node. This improves network performance.

In some possible implementations, the first donor node may broadcast the fourth indication information, so that the relay node accesses the first donor node. After receiving the fourth indication information, the relay node may access the first donor node based on the fourth indication information. In this implementation, after the relay node accesses the network via the first donor node, in other words, after the relay node accesses the network, both the RRC connection and the F1 connection of the relay node are terminated at the first donor node. In a moving process of the relay node, the relay node may perform a partial migration process. To be specific, in a coverage area of the first donor node, the relay node migrates the RRC connection by performing the partial migration process. When the relay node is out of the coverage area of the first donor node, the relay node performs a full migration process. To be specific, the F1 connection of the relay node is migrated to another donor node. In this implementation, the relay node accesses the network via the master donor node, so that handover of the F1 connection of the relay node between different donor node topologies can be reduced.

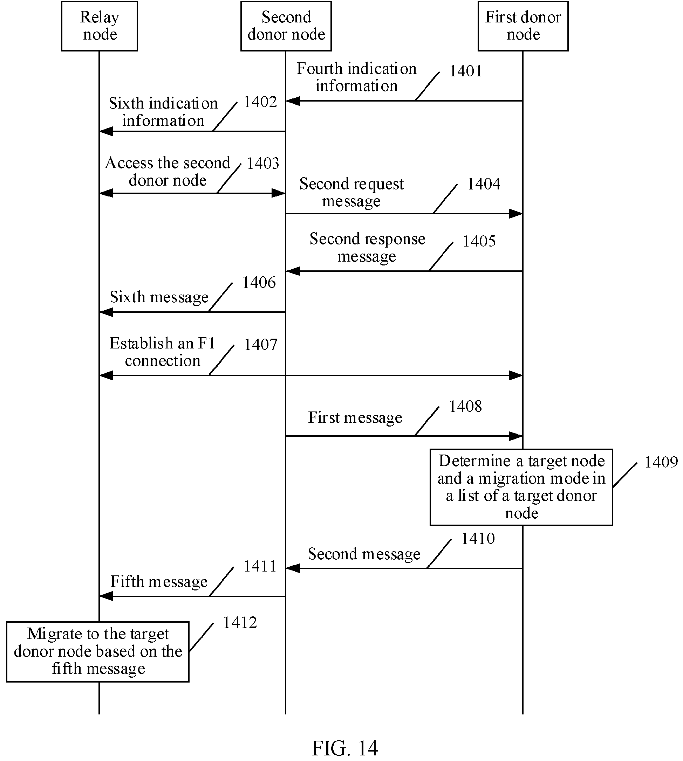

FIG. 14 is a diagram of interaction of still another communication method according to an embodiment of this application. As shown in FIG. 14, the method includes but is not limited to the following steps.

1401: A first donor node sends fourth indication information. Correspondingly, a second donor node receives the fourth indication information. The fourth indication information indicates that the first donor node is a master donor node.

It may be understood that for a specific implementation of step 1401, refer to the related descriptions of step 1301 in FIG. 13. Details are not described herein again.

1402: The second donor node broadcasts sixth indication information. Correspondingly, a relay node receives the sixth indication information. The sixth indication information indicates an IAB support status of the second donor node.

It may be understood that for a specific implementation of step 1402, refer to the related descriptions of step 1302 in FIG. 13. Details are not described herein again.

1403: The relay node accesses the second donor node.

For example, for a specific implementation of step 1403, refer to the related descriptions of step 1303 in FIG. 13. Details are not described herein again.

1404: The second donor node sends a second request message to the first donor node. Correspondingly, the first donor node receives the second request message. The second request message is used to request to establish an F1 connection between the relay node and the first donor node.

It may be understood that for specific descriptions of the second request message, refer to the related descriptions of step 1304 in FIG. 13. Details are not described herein again.

1405: The first donor node sends a second response message. Correspondingly, the second donor node receives the second response message. The second response message includes configuration information used to establish the F1 connection between the relay node and the first donor node.

It may be understood that for specific descriptions of the second response message, refer to the related descriptions of step 1305 in FIG. 13. Details are not described herein again.

1406: The second donor node sends a sixth message to the relay node. Correspondingly, the relay node receives the sixth message. The sixth message includes the configuration information.

It may be understood that for specific descriptions of the sixth message, refer to the related descriptions of step 1306 in FIG. 13. Details are not described herein again.

1407: The relay node establishes the F1 connection to the first donor node based on the configuration information.

For example, for a specific implementation of step 1407, refer to the related descriptions of step 1307 in FIG. 13. Details are not described herein again.

1408: The second donor node sends a first message. Correspondingly, the first donor node receives the first message. The first message includes a list of a target donor node to which a relay node is to migrate.

It may be understood that for specific descriptions of the first message and the list of the target donor node, refer to the related descriptions in FIG. 10. Details are not described herein again.

1409: The first donor node determines a target node and a migration mode in the list of the target donor node. The migration mode includes a first migration mode or a second migration mode. The first migration mode includes migrating the F1 connection of the relay node to the target donor node, and the second migration mode includes maintaining the F1 connection between the relay node and the first donor node.

It may be understood that for a specific implementation of step 1409, refer to the related descriptions of step 1002 in FIG. 10. Details are not described herein again.

1410: The first donor node sends a second message. Correspondingly, the second donor node receives the second message. The second message includes first indication information, and the first indication information indicates the target donor node and the migration mode.

It may be understood that for specific descriptions of the second message and the first indication information, refer to the related descriptions in FIG. 10. Details are not described herein again.

1411: The second donor node sends a fifth message. Correspondingly, the relay node receives the fifth message. The fifth message includes the first indication information, and the fifth message indicates that the relay node is to migrate to the target donor node based on the migration mode.

1412: The relay node migrates to the target donor node based on the fifth message.

For example, after the RRC connection of the relay node is migrated to the target donor node, data traffic of the relay node needs to be migrated to the target donor node.

When the migration mode is the first migration mode, that is, both the RRC connection and the F1 connection of the relay node are migrated to the target donor node, the data traffic of the relay node is migrated via an AMF serving a relay between the first donor node and the target donor node by through NG interfaces.

When the migration mode is the second migration mode, that is, the RRC connection of the relay node is migrated to the target donor node, and the F1 connection of the relay node is maintained on the first donor node, the data traffic of the relay node may be migrated between the first donor node, the second donor node, and the target node by using the method shown in FIG. 11 or FIG. 12.

In this embodiment of this application, after the relay node accesses the second donor node, the second donor node may help establish the F1 connection between the relay node and the first donor node, so that the relay node can quickly establish the F1 connection to the first donor node, to implement quick network access of the relay node, and provide a service for the relay node. This improves network performance. In addition, when the relay node needs to perform migration, the second donor node may report, to the first donor node through the first message, a list of a target donor node to which the relay node can migrate. Then, the first donor node determines, in the list of the target donor node, a target donor node to which the relay node can migrate and a migration mode used by the relay node to migrate to the target donor node. The F1 connection of the relay node is terminated at the first donor node. The first donor node determines the target donor node and the migration mode, so that the relay node can migrate to a proper target donor node, and the relay node can migrate between different donor node topologies more properly.

In this embodiment of this application, when there is a connection between a donor node and the relay node, the donor node retains an XnAP ID between the donor node and an MT of the relay node. For example, when there is an RRC connection between the first donor node and the MT of the relay node, the first donor node retains the XnAP ID between the first donor node and the MT of the relay node. Alternatively, when there is an F1 connection between the first donor node and a DU of the relay node, the first donor node retains the XnAP ID between the first donor node and the MT of the relay node. In this application, the XnAP ID is an identifier identifying the relay node between the first donor node and another donor node (for example, the second donor node), and the first donor node retains the XnAP ID between the first donor node and the relay node, so that the first donor node can perform interaction for the relay node.

A communication apparatus provided in embodiments of this application is described below.

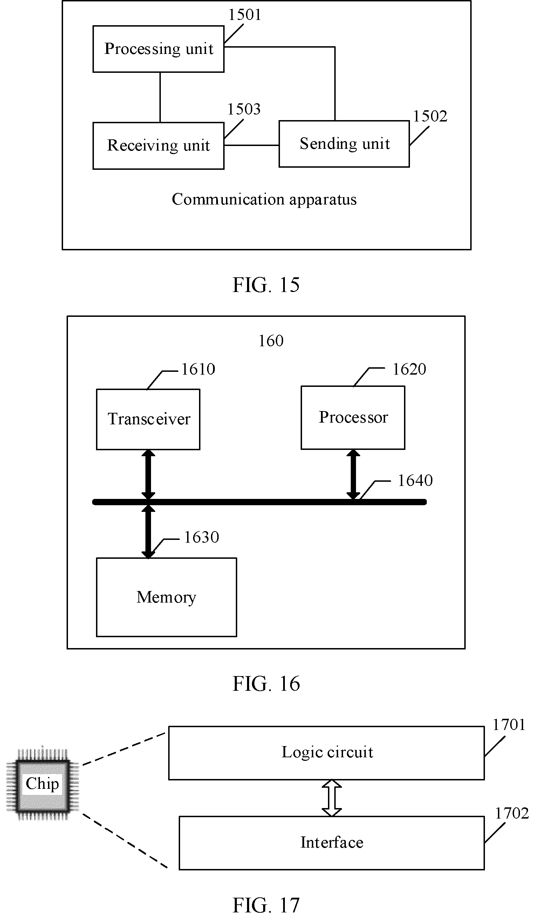

In this application, the communication apparatus is divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in this application, module division is an example, and is merely a logical function division. During actual implementation, another division manner may be used. The following describes in detail the communication apparatus in embodiments of this application with reference to FIG. 15 to FIG. 17.

FIG. 15 is a diagram of a structure of a communication apparatus according to an embodiment of this application. As shown in FIG. 15, the communication apparatus includes a processing unit 1501, a sending unit 1502, and a receiving unit 1503.

In some embodiments of this application, the communication apparatus may be the first donor node shown above. To be specific, the communication apparatus shown in FIG. 15 may be configured to perform the steps, functions, or the like performed by the first donor node in the foregoing method embodiments. For example, the first donor node may be a beamforming transmit device, a chip, or the like. This is not limited in this embodiment of this application.

The receiving unit 1503 is configured to receive a first message.

The processing unit 1501 is configured to determine a target donor node and a migration mode.

The sending unit 1502 is configured to send a second message.

Optionally, the receiving unit 1503 is further configured to receive a third message. The sending unit 1502 is further configured to send a first request message. The receiving unit 1503 is further configured to receive a first response message.

Optionally, the receiving unit 1503 is further configured to receive a fourth message.

Optionally, the sending unit 1502 is further configured to send second indication information.

Optionally, the sending unit 1502 is further configured to send third indication information.

Optionally, the receiving unit 1503 is further configured to receive a second request message. The sending unit 1502 is further configured to send a second response message.

Optionally, the sending unit 1502 is further configured to send fourth indication information.

It may be understood that for specific descriptions of the first message, the second message, the third message, the fourth message, the target donor node, the migration mode, the first request message, the first response message, the first indication information, the second indication information, the third indication information, the second request message, the second response message, and the like, refer to the foregoing method embodiments, for example, the related descriptions of the methods shown in FIG. 10, FIG. 11, FIG. 12, FIG. 13, and FIG. 14. Details are not described herein again.

It may be understood that specific descriptions of the processing unit, the sending unit, and the receiving unit in embodiments of this application are merely examples. For specific functions, steps, or the like performed by the processing unit, the sending unit, and the receiving unit, refer to the foregoing method embodiments. Details are not described herein again.

FIG. 15 is reused. In some other embodiments of this application, the communication apparatus may be the second donor node shown above. To be specific, the communication apparatus shown in FIG. 15 may be configured to perform the steps, functions, or the like performed by the second donor node in the foregoing method embodiments. For example, the communication apparatus may be a beamforming receive device, a chip, or the like. This is not limited in this embodiment of this application.

The sending unit 1502 is configured to send a first message.

The receiving unit 1503 is configured to receive a second message.

Optionally, the sending unit 1502 is configured to send a fifth message.

Optionally, the sending unit 1502 is further configured to send a third message.

Optionally, the sending unit 1502 is further configured to send a third request message. The receiving unit 1503 is further configured to receive a third response message.

Optionally, the receiving unit 1503 is further configured to receive second indication information.

Optionally, the sending unit 1502 is further configured to send a second request message. The receiving unit 1503 is further configured to receive a second response message.

Optionally, the sending unit 1502 is further configured to send a sixth message.

Optionally, the receiving unit 1503 is further configured to receive fourth indication information.

It may be understood that for specific descriptions of the first message, the second message, the third message, a fourth message, a target donor node, a migration mode, the third request message, the third response message, first indication information, second indication information, third indication information, the second request message, the second response message, and the like, refer to the foregoing method embodiments, for example, the related descriptions of the methods shown in FIG. 10, FIG. 11, FIG. 12, FIG. 13, and FIG. 14. Details are not described herein again.

It may be understood that specific descriptions of the receiving unit, the sending unit, and the processing unit in embodiments of this application are merely examples. For specific functions, steps, or the like performed by the receiving unit, the sending unit, and the processing unit, refer to the foregoing method embodiments. Details are not described herein again.

FIG. 15 is reused. In some other embodiments of this application, the communication apparatus may be the relay node shown above. To be specific, the communication apparatus shown in FIG. 15 may be configured to perform the steps, functions, or the like performed by the relay node in the foregoing method embodiments. For example, the communication apparatus may be a beamforming receive device, a chip, or the like. This is not limited in this embodiment of this application.

The receiving unit 1503 is configured to receive a fifth message.

The processing unit 1501 is configured to perform migration to a target donor node based on the fifth message.

Optionally, the receiving unit 1503 is further configured to receive third indication information.

The processing unit 1501 is further configured to release a context corresponding to a data traffic list that is not added to the target donor node.

Optionally, the receiving unit 1503 is configured to receive a sixth message. The processing unit 1501 is further configured to establish an F1 connection to a first donor node.

It may be understood that for specific descriptions of a first message, a second message, a third message, a fourth message, the target donor node, a migration mode, a third request message, a third response message, first indication information, second indication information, the third indication information, a second request message, a second response message, and the like, refer to the foregoing method embodiments, for example, the related descriptions of the methods shown in FIG. 10, FIG. 11, FIG. 12, FIG. 13, and FIG. 14. Details are not described herein again.

It may be understood that specific descriptions of the processing unit, the sending unit, and the receiving unit in embodiments of this application are merely examples. For specific functions, steps, or the like performed by the receiving unit, the sending unit, and the processing unit, refer to the foregoing method embodiments. Details are not described herein again.

The foregoing describes the first donor node, the second donor node, and the relay node in embodiments of this application. The following describes possible product forms of the first donor node, the second donor node, and the relay node. It should be understood that a product in any form that has a function of the first donor node in FIG. 15, or a product in any form that has a function of the second donor node in FIG. 15, or a product in any form that has a function of the relay node in FIG. 15 falls within the protection scope of embodiments of this application. It should be further understood that the following descriptions are merely examples, and product forms of the first donor node, the second donor node, and the relay node in embodiments of this application are not limited thereto.

In the communication apparatus shown in FIG. 15, the processing unit 1501 may be one or more processors, the sending unit 1502 may be a transmitter, and the receiving unit 1503 may be a receiver. The sending unit and the receiving unit are integrated into one component, for example, a transceiver. Alternatively, the processing unit 1501 may be one or more processors (or the processing unit 1501 may be one or more logic circuits), the sending unit 1502 may be an output interface, and the receiving unit 1503 may be an input interface. The input interface and the output interface may be integrated into one unit, for example, an input/output interface. Details are described below.

In a possible implementation, in the communication apparatus shown in FIG. 15, the processing unit 1501 may be one or more processors, and the sending unit 1502 and the receiving unit 1503 are integrated into one component, for example, a transceiver. In embodiments of this application, the processor and the transceiver may be coupled or the like, and a connection manner of the processor and the transceiver is not limited in embodiments of this application.

As shown in FIG. 16, a communication apparatus 160 includes one or more processors 1620 and a transceiver 1610.

For example, when the communication apparatus is configured to perform the steps, the methods, or the functions performed by the foregoing first donor node, the processor 1620 is configured to determine a target donor node and a migration mode. The transceiver 1610 is configured to: receive a first message, and send a second message. Optionally, the transceiver 1610 is further configured to: receive a third message, send a first request message, and receive a first response message. Optionally, the transceiver 1610 is further configured to receive a fourth message. Optionally, the transceiver 1610 is further configured to send second indication information. Optionally, the transceiver 1610 is further configured to send third indication information. Optionally, the transceiver 1610 is further configured to: receive a second request message, and send a second response message. Optionally, the transceiver 1610 is further configured to send fourth indication information or the like.

For example, when the communication apparatus is configured to perform the steps, the methods, or the functions performed by the foregoing second donor node, the transceiver 1610 is configured to send a first message and receive a second message. Optionally, the transceiver 1610 is further configured to send a fifth message. Optionally, the transceiver 1610 is further configured to send a third message. Optionally, the transceiver 1610 is further configured to: send a third request message, and receive a third response message. Optionally, the transceiver 1610 is further configured to receive second indication information. Optionally, the transceiver 1610 is further configured to: send a second request message, and receive a second response message. Optionally, the transceiver 1610 is further configured to send a sixth message. Optionally, the transceiver 1610 is further configured to receive fourth indication information.

For example, when the communication apparatus is configured to perform the steps, the methods, or the functions performed by the foregoing relay node, the transceiver 1610 is configured to receive a fifth message. The processor 1620 is configured to perform migration to a target donor node based on the fifth message. Optionally, the transceiver 1610 is further configured to receive third indication information. The processor 1620 is further configured to release a context corresponding to a data traffic list that is not added to the target donor node. Optionally, the transceiver 1610 is configured to receive a sixth message. The processor 1620 is further configured to establish an F1 connection to a first donor node.

It may be understood that for specific descriptions of the first message, the second message, the third message, the fourth message, the target donor node, the migration mode, the third request message, the third response message, the first indication information, the second indication information, the third indication information, the first request message, the first response message, the second request message, the second response message, and the like, refer to the foregoing method embodiments, for example, the related descriptions of the methods shown in FIG. 10, FIG. 11, FIG. 12, FIG. 13, and FIG. 14. Details are not described herein again.

It may be understood that for specific descriptions of the processor and the transceiver, refer to the descriptions of the processing unit, the sending unit, and the receiving unit shown in FIG. 15. Details are not described herein again.

In various implementations of the communication apparatus shown in FIG. 16, the transceiver may include a receiver and a transmitter, the receiver is configured to perform a receiving function (or operation), and the transmitter is configured to perform a transmitting function (or operation). The transceiver is configured to communicate with another device/apparatus via a transmission medium.

Optionally, the communication apparatus 160 may further include one or more memories 1630, configured to store program instructions and/or data. The memory 1630 is coupled to the processor 1620. The coupling in this embodiment of this application may be an indirect coupling or a communication connection between apparatuses, units, or modules in an electrical form, a mechanical form, or another form, and is used for information exchange between the apparatuses, the units, or the modules. The processor 1620 may cooperate with the memory 1630. The processor 1620 may execute the program instructions stored in the memory 1630. Optionally, at least one of the one or more memories may be included in the processor.

A specific connection medium between the transceiver 1610, the processor 1620, and the memory 1630 is not limited in this embodiment of this application. In this embodiment of this application, the memory 1630, the processor 1620, and the transceiver 1610 are connected through a bus 1640 in FIG. 16. The bus is represented by a thick line in FIG. 16. A manner of connection between other components is merely an example for description, and imposes no limitation. The bus may be classified into an address bus, a data bus, a control bus, and the like. For ease of description, the bus in FIG. 16 is represented by only one thick line, but this does not indicate that there is only one bus or one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or perform the methods, the steps, and the logical block diagrams disclosed in embodiments of this application. The general-purpose processor may be a microprocessor, any conventional processor, or the like. The steps of the methods disclosed in combination with embodiments of this application may be directly implemented by a hardware processor, or may be implemented by a combination of hardware and software modules in the processor, or the like.

In this embodiment of this application, the memory may include but is not limited to a nonvolatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application), but is not limited thereto. The memory in this embodiment of this application may alternatively be a circuit or any other apparatus that can implement a storage function, and is configured to store the program instructions and/or the data.

The processor 1620 is mainly configured to: process a communication protocol and communication data, control the entire communication apparatus, execute a software program, and process data of the software program. The memory 1630 is mainly configured to store the software program and the data. The transceiver 1610 may include a control circuit and an antenna. The control circuit is mainly configured to: perform conversion between a baseband signal and a radio frequency signal, and process the radio frequency signal. The antenna is mainly configured to receive and send a radio frequency signal in a form of an electromagnetic wave. An input/output apparatus, such as a touchscreen, a display, or a keyboard, is mainly configured to: receive data input by a user and output data to the user.

After the communication apparatus is powered on, the processor 1620 may read the software program in the memory 1630, interpret and execute instructions of the software program, and process the data of the software program. When data needs to be sent wirelessly, the processor 1620 performs baseband processing on the to-be-sent data, and outputs a baseband signal to a radio frequency circuit. The radio frequency circuit performs radio frequency processing on the baseband signal, and sends, through the antenna, a radio frequency signal in an electromagnetic wave form. When data is sent to the communication apparatus, the radio frequency circuit receives a radio frequency signal through the antenna, converts the radio frequency signal into a baseband signal, and outputs the baseband signal to the processor 1620. The processor 1620 converts the baseband signal into data and processes the data.

In another implementation, the radio frequency circuit and the antenna may be disposed independently of a processor that performs baseband processing. For example, in a distributed scenario, the radio frequency circuit and the antenna may be remotely disposed independent of the communication apparatus.

It may be understood that the communication apparatus shown in this embodiment of this application may alternatively include more components than those shown in FIG. 16, or the like. This is not limited in this embodiment of this application. The methods performed by the processor and the transceiver are merely examples. For specific steps performed by the processor and the transceiver, refer to the methods described above.

In another possible implementation, in the communication apparatus shown in FIG. 15, the processing unit 1501 may be one or more logic circuits, the sending unit 1502 may be an output interface, and the receiving unit 1503 may be an input interface. The input interface and the output interface may be integrated into one unit, for example, an input/output interface. The input/output interface is also referred to as a communication interface, an interface circuit, an interface, or the like. A communication apparatus shown in FIG. 17 includes a logic circuit 1701 and an interface 1702. To be specific, the processing unit 1501 may be implemented by using the logic circuit 1701, and the sending unit 1502 and the receiving unit 1503 may be implemented by using the interface 1702. The logic circuit 1701 may be a chip, a processing circuit, an integrated circuit, a system on chip (system on chip, SoC), or the like. The interface 1702 may be a communication interface, an input/output interface, a pin, or the like. For example, FIG. 17 shows an example in which the communication apparatus is a chip. The chip includes the logic circuit 1701 and the interface 1702.

In this embodiment of this application, the logic circuit and the interface may be further coupled to each other. A specific manner of connection between the logic circuit and the interface is not limited in this embodiment of this application.

For example, when the communication apparatus is configured to perform the methods, the functions, or the steps performed by the foregoing first donor node, the logic circuit 1701 is configured to determine a target donor node and a migration mode. The interface 1702 is configured to: input a first message, and output a second message. Optionally, the interface 1702 is further configured to: input a third message, output a first request message, and input a first response message. Optionally, the interface 1702 is further configured to input a fourth message. Optionally, the interface 1702 is further configured to output second indication information. Optionally, the interface 1702 is further configured to output third indication information. Optionally, the interface 1702 is further configured to: input a second request message, and output a second response message. Optionally, the interface 1702 is further configured to output fourth indication information.

For example, when the communication apparatus is configured to perform the methods, the functions, or the steps performed by the foregoing second donor node, the interface 1702 is configured to: output a first message, and input a second message. Optionally, the interface 1702 is further configured to output a fifth message. Optionally, the interface 1702 is further configured to output a third message. Optionally, the interface 1702 is further configured to: output a third request message, and input a third response message. Optionally, the interface 1702 is further configured to input second indication information. Optionally, the interface 1702 is further configured to: output a second request message, and input a second response message. Optionally, the interface 1702 is further configured to output a sixth message. Optionally, the interface 1702 is further configured to input fourth indication information.

For example, when the communication apparatus is configured to perform the methods, the functions, or the steps performed by the foregoing relay node, the interface 1702 is configured to input a fifth message. The logic circuit 1701 is configured to perform migration to a target donor node based on the fifth message. Optionally, the interface 1702 is further configured to input third indication information. The logic circuit 1701 is further configured to release a context corresponding to a data traffic list that is not added to the target donor node. Optionally, the interface 1702 is configured to input a sixth message. The logic circuit 1701 is further configured to establish an F1 connection to a first donor node.

It may be understood that the communication apparatus shown in this embodiment of this application may implement the methods provided in embodiments of this application in a form of hardware, or may implement the methods provided in embodiments of this application in a form of software. This is not limited in embodiments of this application.

For specific descriptions of the first message, the second message, the third message, the fourth message, the target donor node, the migration mode, the third request message, the third response message, the first indication information, the second indication information, the third indication information, the first request message, the first response message, the second request message, the second response message, and the like, refer to the foregoing method embodiments, for example, the related descriptions of the methods shown in FIG. 10, FIG. 11, FIG. 12, FIG. 13, and FIG. 14. Details are not described herein again.

For specific implementations of embodiments shown in FIG. 17, refer to the foregoing embodiments. Details are not described herein again.

An embodiment of this application further provides a communication system. The communication system includes a first donor node, a second donor node, and a relay node. The first donor node, the second donor node, and the relay node may be configured to perform the method in any one of the foregoing embodiments (as shown in FIG. 10, FIG. 11, FIG. 12, FIG. 13, FIG. 14, or the like).

In addition, this application further provides a computer program. The computer program is configured to implement the operations and/or processing performed by the first donor node in the method provided in this application.

This application further provides a computer program. The computer program is configured to implement the operations and/or processing performed by the second donor node in the method provided in this application.

This application further provides a computer program. The computer program is configured to implement the operations and/or processing performed by the relay node in the method provided in this application.

This application further provides a computer-readable storage medium. The computer-readable storage medium stores computer code. When the computer code is run on a computer, the computer is enabled to perform the operations and/or processing performed by the first donor node in the method provided in this application.

This application further provides a computer-readable storage medium. The computer-readable storage medium stores computer code. When the computer code is run on a computer, the computer is enabled to perform the operations and/or processing performed by the second donor node in the method provided in this application.

This application further provides a computer-readable storage medium. The computer-readable storage medium stores computer code. When the computer code is run on a computer, the computer is enabled to perform the operations and/or processing performed by the relay node in the method provided in this application.

This application further provides a computer program product. The computer program product includes computer code or a computer program. When the computer code or the computer program runs on a computer, the operations and/or processing performed by the first donor node in the method provided in this application is enabled to be performed.

This application further provides a computer program product. The computer program product includes computer code or a computer program. When the computer code or the computer program runs on a computer, the operations and/or processing performed by the second donor node in the method provided in this application is enabled to be performed.

This application further provides a computer program product. The computer program product includes computer code or a computer program. When the computer code or the computer program runs on a computer, the operations and/or processing performed by the relay node in the method provided in this application is enabled to be performed.

An embodiment of this application further provides a chip or a chip system, including a processor, configured to perform the method in any one of the foregoing embodiments (as shown in FIG. 10, FIG. 11, FIG. 12, FIG. 13, FIG. 14, or the like).

In the several embodiments provided in this application, it should be understood that the disclosed systems, apparatuses, and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement to implement the technical effects of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first donor node, a first message from a second donor node, wherein the first message comprises a list of a target donor node to which a relay node is to migrate, there is an F1 connection between the first donor node and the relay node, and there is a radio resource control RRC connection between the second donor node and the relay node;
determining, by the first donor node, a target donor node and a migration mode in the list of the target donor node, wherein the migration mode comprises a first migration mode or a second migration mode, the first migration mode comprises migrating the F1 connection of the relay node to the target donor node, and the second migration mode comprises maintaining the F1 connection between the relay node and the first donor node; and
sending, by the first donor node, a second message to the second donor node, wherein the second message comprises first indication information, and the first indication information indicates the target donor node and the migration mode.

2. The method according to claim 1, wherein the determining, by the first donor node, a target donor node and a migration mode in the list of the target donor node comprises:
determining, by the first donor node, the target donor node and the migration mode in the list of the target donor node based on a connection relationship, wherein the connection relationship is at least one of the following connections between the first donor node and the donor node in the list of the target donor node: an Xn connection, an NG connection, and an internet protocol IP network connection.

3. The method according to claim 2, wherein the migration mode comprises the second migration mode, there is the Xn connection between the first donor node and a central unit CU of the target donor node, and there is the IP network connection between the first donor node and a distributed unit DU of the target donor node.

4. The method according to claim 2, wherein the migration mode comprises the first migration mode, there is the NG connection between the first donor node and an access and mobility management function AMF, and there is the NG connection between the target donor node and the AMF.

5. The method according to any one of claims 1 to 4, wherein the method further comprises:
receiving, by the first donor node, a third message from the second donor node, wherein the third message indicates that the first donor node is to initiate a migration procedure for data traffic of the relay node to the target donor node;
sending, by the first donor node, a first request message to the target donor node based on the third message, wherein the first request message is used to request migration of the data traffic; and
receiving, by the first donor node, a first response message from the target donor node, wherein the first response message is used to respond to the migration of the data traffic.

6. The method according to claim 5, wherein the third message comprises at least one of the following: an Xn interface identifier allocated by the target donor node to the relay node, an identifier of the target donor node, or an IP address of the relay node in a topology corresponding to the target donor node.

7. The method according to any one of claims 1 to 4, wherein the method further comprises:
receiving, by the first donor node, a fourth message from the second donor node, wherein the fourth message comprises a migration result of migrating data traffic of the relay node to the target donor node, and the migration result comprises a data traffic list that is added to the target donor node and/or a data traffic list that is not added to the target donor node.

8. The method according to claim 7, wherein the method further comprises:
sending, by the first donor node, second indication information to the second donor node, wherein the second indication information indicates that the second donor node is to initiate a migration procedure for the data traffic of the relay node to the target donor node.

9. The method according to claim 7 or 8, wherein the method further comprises:
sending, by the first donor node, third indication information to the relay node, wherein the third indication information indicates that the relay node is to release a context corresponding to the data traffic list that is not added to the target donor node.

10. The method according to any one of claims 1 to 9, wherein the method further comprises:
receiving, by the first donor node, a second request message from the second donor node, wherein the second request message is used to request to establish an F1 connection between the relay node and the first donor node; and
sending, by the first donor node, a second response message to the second donor node, wherein the second response message comprises configuration information used to establish the F1 connection.

11. The method according to claim 10, wherein the configuration information comprises a key of the first donor node, and the key is used to establish the F1 connection.

12. The method according to claim 10 or 11, wherein the second request message comprises at least one of the following: an Xn interface identifier allocated by the second donor node to the relay node, an IP address of the relay node in a topology corresponding to the second donor node, or a differentiated services code point DSCP or Flow-label information corresponding to the IP address; and
the second response message further comprises an Xn interface identifier allocated by the first donor node to the relay node and/or an IP address of the first donor node.

13. The method according to claim 2, wherein the determining, by the first donor node, the target donor node in the list of the target donor node based on a connection relationship comprises:
determining, by the first donor node, at least one master donor node in the list of the target donor node based on the connection relationship, wherein the master donor node is configured to manage an F1 connection of a donor node set, and when there is an RRC connection between the relay node and any donor node in the donor node set, the F1 connection of the relay node is terminated at the master donor node; and
determining, by the first donor node, the target donor node in the at least one master donor node.

14. The method according to claim 13, wherein the first donor node is the master donor node, and the method further comprises:
sending, by the first donor node, fourth indication information, wherein the fourth indication information indicates that the first donor node is the master donor node.

15. A communication method, comprising:
sending, by a second donor node, a first message to a first donor node, wherein the first message comprises a list of a target donor node to which a relay node is to migrate, there is an F1 connection between the first donor node and the relay node, there is a radio resource control RRC connection between the second donor node and the relay node, the first message indicates that the first donor node is to determine a target donor node and a migration mode in the list of the target donor node, the migration mode comprises a first migration mode or a second migration mode, the first migration mode comprises migrating the F1 connection of the relay node to the target donor node, and the second migration mode comprises maintaining the F1 connection between the relay node and the first donor node; and
receiving, by the second donor node, a second message from the first donor node, wherein the second message comprises first indication information, and the first indication information indicates the target donor node and the migration mode.

16. The method according to claim 15, wherein the method further comprises:
sending, by the second donor node, a fifth message to the relay node, wherein the fifth message comprises the first indication information, and the fifth message indicates that the relay node is to migrate to the target donor node based on the migration mode.

17. The method according to claim 15 or 16, wherein the migration mode comprises the second migration mode, there is an Xn connection between the first donor node and a central unit CU of the target donor node, and there is an internet protocol IP network connection between the first donor node and a distributed unit DU of the target donor node.

18. The method according to claim 15 or 16, wherein the migration mode comprises the first migration mode, there is an NG connection between the first donor node and an access and mobility management function AMF, and there is the NG connection between the target donor node and the AMF.

19. The method according to any one of claims 15 to 18, wherein the method further comprises:
sending, by the second donor node, a third message to the first donor node, wherein the third message indicates that the first donor node is to initiate a migration procedure for data traffic of the relay node to the target donor node.

20. The method according to claim 19, wherein the third message comprises at least one of the following: an Xn interface identifier allocated by the target donor node to the relay node, an identifier of the target donor node, or an IP address of the relay node in a topology corresponding to the target donor node.

21. The method according to any one of claims 15 to 18, wherein the method further comprises:
sending, by the second donor node, a third request message to the target donor node, wherein the third request message is used to request migration of data traffic of the relay node from the target donor node;
receiving, by the second donor node, a third response message from the target donor node, wherein the third response message comprises a migration result of migrating the data traffic of the relay node to the target donor node, and the migration result comprises a data traffic list that is added to the target donor node and/or a data traffic list that is not added to the target donor node; and
sending, by the second donor node, a fourth message to the first donor node, wherein the fourth message comprises the migration result.

22. The method according to claim 21, wherein the method further comprises:
receiving, by the second donor node, second indication information from the first donor node, wherein the second indication information indicates that the second donor node is to initiate a migration procedure for the data traffic to the target donor node.

23. The method according to claim 21 or 22, wherein the third request message comprises an Xn interface identifier allocated by the first donor node to the relay node and an identifier of the first donor node.

24. The method according to any one of claims 15 to 23, wherein the method further comprises:
sending, by the second donor node, a second request message to the first donor node, wherein the second request message is used to request to establish an F1 connection between the relay node and the first donor node; and
receiving, by the second donor node, a second response message from the first donor node, wherein the second response message comprises configuration information used to establish the F1 connection.

25. The method according to claim 24, wherein the method further comprises:
sending, by the second donor node, a sixth message to the relay node based on the second response message, wherein the sixth message comprises the configuration information.

26. The method according to claim 24 or 25, wherein the configuration information comprises a key of the first donor node, and the key is used to establish the F1 connection.

27. The method according to any one of claims 24 to 26, wherein the second request message comprises at least one of the following: an Xn interface identifier allocated by the second donor node to the relay node, an IP address of the relay node in a topology corresponding to the second donor node, or a differentiated services code point DSCP or Flow-label information corresponding to the IP address; and
the second response message further comprises the Xn interface identifier allocated by the first donor node to the relay node and/or an IP address of the first donor node.

28. The method according to any one of claims 15 to 27, wherein the first donor node is a master donor node, the master donor node is configured to manage an F1 connection of a donor node set, and when there is an RRC connection between the relay node and any donor node in the donor node set, the F1 connection of the relay node is terminated at the master donor node; and the method further comprises:
receiving, by the second donor node, fourth indication information, wherein the fourth indication information indicates that the first donor node is the master donor node.

29. A communication method, comprising:
receiving, by a relay node, a fifth message from a second donor node, wherein the fifth message comprises first indication information, the first indication information indicates a target donor node and a migration mode, there is a radio resource control RRC connection between the relay node and the second donor node, there is an F1 connection between the relay node and a first donor node, the migration mode comprises a first migration mode or a second migration mode, the first migration mode comprises migrating the F1 connection of the relay node to the target donor node, and the second migration mode comprises maintaining the F1 connection between the relay node and the first donor node; and
migrating, by the relay node, to the target donor node based on the fifth message.

30. The method according to claim 29, wherein the migration mode comprises the second migration mode, there is an Xn connection between the first donor node and a central unit CU of the target donor node, and there is an internet protocol IP network connection between the first donor node and a distributed unit DU of the target donor node; and the migrating, by the relay node, to the target donor node based on the fifth message comprises:
releasing, by the relay node, the RRC connection between the relay node and the second donor node, and establishing the RRC connection to the target donor node.

31. The method according to claim 29, wherein the migration mode comprises the first migration mode, there is an NG connection between the first donor node and an access and mobility management function AMF, and there is the NG connection between the target donor node and the AMF; and the migrating, by the relay node, to the target donor node based on the fifth message comprises:
releasing, by the relay node, the RRC connection between the relay node and the second donor node, and establishing the RRC connection to the target donor node; and
releasing, by the relay node, the F1 connection between the relay node and the first donor node, and establishing the F1 connection to the target donor node.

32. The method according to any one of claims 29 to 31, wherein the method further comprises:
receiving, by the relay node, third indication information from the first donor node, wherein the third indication information indicates that the relay node is to release a context corresponding to a data traffic list that is not added to the target donor node; and
releasing, by the relay node based on the third indication information, the context corresponding to the data traffic list that is not added to the target donor node.

33. The method according to any one of claims 29 to 32, wherein the method further comprises:
receiving, by the relay node, a sixth message from the second donor node, wherein the sixth message comprises configuration information used to establish the F1 connection; and
establishing, by the relay node, the F1 connection to the first donor node based on the configuration information.

34. The method according to claim 33, wherein the configuration information comprises a key of the first donor node, and the key is used to establish the F1 connection.

35. The method according to claim 33 or 34, wherein the sixth message further comprises an IP address of the first donor node.

36. A communication apparatus, comprising:
a receiving unit, configured to receive a first message from a second donor node, wherein the first message comprises a list of a target donor node to which a relay node is to migrate, there is an F1 connection between the communication apparatus and the relay node, and there is a radio resource control RRC connection between the second donor node and the relay node;
a processing unit, configured to determine a target donor node and a migration mode in the list of the target donor node, wherein the migration mode comprises a first migration mode or a second migration mode, the first migration mode comprises migrating the F1 connection of the relay node to the target donor node, and the second migration mode comprises maintaining the F1 connection between the relay node and the communication apparatus; and
a sending unit, configured to send a second message to the second donor node, wherein the second message comprises first indication information, and the first indication information indicates the target donor node and the migration mode.

37. A communication apparatus, comprising:
a sending unit, configured to send a first message to a first donor node, wherein the first message comprises a list of a target donor node to which a relay node is to migrate, there is an F1 connection between the first donor node and the relay node, there is a radio resource control RRC connection between the communication apparatus and the relay node, the first message indicates that the first donor node is to determine a target donor node and a migration mode in the list of the target donor node, the migration mode comprises a first migration mode or a second migration mode, the first migration mode comprises migrating the F1 connection of the relay node to the target donor node, and the second migration mode comprises maintaining the F1 connection between the relay node and the first donor node; and
a receiving unit, configured to receive a second message from the first donor node, wherein the second message comprises first indication information, and the first indication information indicates the target donor node and the migration mode.

38. A communication apparatus, comprising:
a receiving unit, configured to receive a fifth message from a second donor node, wherein the fifth message comprises first indication information, the first indication information indicates a target donor node and a migration mode, there is a radio resource control RRC connection between the communication apparatus and the second donor node, there is an F1 connection between the communication apparatus and a first donor node, the migration mode comprises a first migration mode or a second migration mode, the first migration mode comprises migrating the F1 connection of the communication apparatus to the target donor node, and the second migration mode comprises maintaining the F1 connection between the communication apparatus and the first donor node; and
a processing unit, configured to perform migration to the target donor node based on the fifth message.

39. A communication apparatus, comprising a processor and a memory, wherein
the memory is configured to store computer-executable instructions; and
the processor is configured to execute the computer-executable instructions, to perform the method according to any one of claims 1 to 14; or to perform the method according to any one of claims 15 to 28; or to perform the method according to any one of claims 29 to 35.

40. A computer-readable storage medium, wherein the computer-readable storage medium is configured to store a computer program; and when the computer program is executed, the method according to any one of claims 1 to 14 is performed, or the method according to any one of claims 15 to 28 is performed, or the method according to any one of claims 29 to 35 is performed.

41. A communication system, comprising a first donor node, a second donor node, and a relay node, wherein the first donor node is configured to perform the method according to any one of claims 1 to 14, the second donor node is configured to perform the method according to any one of claims 15 to 28, and the relay node is configured to perform the method according to any one of claims 29 to 35.
